# FASCICULE DE BREVET EUROPEEN

(11) **EP 2 575 570 B1**
(45) Date de publication et mention de la délivrance du brevet: **02.08.2017**
(21) Numéro de dépôt: 11722781.9
(22) Date de dépôt: 23.05.2011
(51) Int. Cl.: A47J 31/44, A47J 31/36

(54) **ENSEMBLE POUR MACHINE DE PRODUCTION DE BOISSONS PAR INFUSION**
ANORDNUNG FÜR EINE MASCHINE ZUR HERSTELLUNG VON BRÜHGETRÄNKEN
ASSEMBLY FOR A MACHINE FOR MAKING INFUSED BEVERAGES

(30) Priorité: 25.05.2010 FR 1054010
(43) Date de publication de la demande: 10.04.2013
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2011/058388
(87) Numéro de publication internationale: WO 2011/147790

(56) Documents cités:
- US-A- 5 144 886
- US-A1- 2007 151 459
- US-B1- 6 904 840

## Description

La présente invention concerne un ensemble formé d'un groupe d'infusion amovible et de ses éléments de support ou de verrouillage pour une machine de préparation de boissons par extraction d'un produit à infuser.

Elle trouve plus particulièrement son application dans le domaine des machines à café de type EXPRESSO. Elle pourra également s'appliquer à la production de boissons à partir d'autres matières telles que le thé. Elle trouvera pour application particulière le domaine des machines de production de boissons par infusion d'un produit contenu dans une dose.

De manière connue, ces machines comprennent un groupe d'infusion assurant l'extraction d'un produit tel que le café. Un groupe d'infusion comporte habituellement une chambre d'extraction étanche lors de la phase d'extraction et apte à s'ouvrir pour recevoir ou libérer le produit servant à l'infusion. La sortie de la chambre débouche vers un récipient tel qu'une tasse. L'entrée de la chambre est destinée à être connectée fluidiquement à une chaudière. Le groupe d'infusion comprend généralement un vérin qui actionne l'ouverture et la fermeture de la chambre. Le groupe comprend ainsi de nombreux organes et de nombreuses connexions fluidiques. Une telle machine est connue par exemple du document WO 2008/142040 A1. Dans de nombreuses machines, le groupe est fixé sur le bâti de la machine de manière non amovible. Le démontage des machines est alors rendu très difficile voire impossible. Ces machines ne peuvent alors pas être aisément réparées ou recyclées en fin de vie. Elles ne répondent pas aux exigences d'éco-conception qui imposent le démantèlement et le recyclage des machines.

D'autres machines présentent des conceptions qui permettent le démontage du groupe d'infusion par rapport au bâti. Ces machines font intervenir un nombre important d'organes de fixation amovibles tels des vis et des écrous. La mise en place de ces organes, tant lors de l'assemblage du groupe que lors du démontage, induise un nombre d'étapes et un temps nécessaire au montage et au démantèlement de la machine relativement élevés. Les coûts de fabrication et de recyclage sont donc relativement importants. Pour des raisons économiques il n'est par conséquent pas possible de démanteler ces groupes en fin de vie.

Ainsi, il existe un besoin consistant à proposer une machine de préparation de boissons présentant une facilité de démontage de son ensemble portant le groupe d'infusion dans le but de son nettoyage, de sa maintenance et/ou pour son démantèlement en fin de vie, ceci sans qu'aucune solution satisfaisante n'ait déjà été jusqu'à présent proposée pour la résolution de ce besoin.

La présente invention vise à satisfaire ce besoin.

A cet effet, on prévoit selon l'invention un ensemble pour machine de préparation de boissons par extraction d'un produit à infuser tel que défini dans la revendication 1.

Un ensemble correspondant au préambule de la revendication 1 est décrit dans le document US 2008/0173181 A1.
- dans une position d'activation des moyens d'actionnement, les moyens de verrouillage autorisent la désolidarisation du groupe par rapport au réceptacle.

L'effet technique obtenu est un montage et démontage simplifiés du groupe d'infusion par rapport à son ensemble. Ceci procure une facilité de maintenance ainsi qu'une possibilité de démantèlement en fin de vie de la machine portant ce groupe, ceci à un coût raisonnable.

De manière facultative, l'invention comprend en outre au moins l'une quelconque des caractéristiques suivantes :
- un organe de verrouillage formant pêne est porté par le groupe tandis que son ou ses organes de verrouillage complémentaires formant gâches sont portés par le réceptacle. Ceci présente l'avantage d'avoir un système de verrouillage sûr et économique pour le verrouillage ou déverrouillage du groupe d'infusion, ce système étant simple de réalisation.
- les moyens de verrouillage comprennent au moins deux organes de verrouillage formant pênes et au moins un organe de verrouillage complémentaire formant gâche par organe de verrouillage formant pêne, l'organe de verrouillage complémentaire étant sous la forme d'un logement recevant l'organe de verrouillage formant pêne en position de verrouillage. Ceci présente l'avantage d'équilibrer l'effort de verrouillage exercé sur le groupe d'infusion en le rendant avantageusement symétrique par rapport à ce groupe.
- il est prévu deux logements par organe de verrouillage formant pêne. L'avantage résultant est une action de verrouillage plus solide et répartie en deux endroits.
- le groupe comprend au moins un connecteur hydraulique et le réceptacle comprend au moins un connecteur complémentaire pour assurer l'alimentation hydraulique du groupe. Typiquement, ce connecteur assure l'alimentation en eau de la chambre d'extraction. Il peut également assurer l'alimentation en eau d'un vérin porté par le groupe. De préférence, une pompe est disposée en amont du groupe. Elle permet d'alimenter le groupe en fluide sous pression. Le connecteur du groupe et le connecteur complémentaire du réceptacle sont conformés pour définir une direction de poussée pour un fluide sous pression injecté dans le groupe. Typiquement, pour un connecteur sensiblement cylindrique, la direction de poussée est parallèle à l'axe du cylindre. Avantageusement, l'organe de verrouillage et l'organe de verrouillage complémentaire sont configurés de sorte que la force de poussée exercée sur le groupe lors de l'injection du fluide sous pression tende à rapprocher l'organe de verrouillage et l'organe de verrouillage complémentaire, assurant ainsi la solidarisation du groupe sur le réceptacle. De préférence, l'au moins un organe de verrouillage est configuré pour coulisser selon une direction perpendiculaire à ladite direction de poussée. Il s'oppose ainsi à la désolidarisation du groupe sous l'effet de la force de poussée.
- l'ensemble est configuré pour être alimenté en fluide sous pression et de sorte que l'alimentation en fluide sous pression génère sur le groupe une force de poussée selon une direction de poussée. L'ensemble étant en outre conformé de manière à ce que l'organe de verrouillage et l'organe de verrouillage complémentaire coopèrent de sorte que ladite force de poussée tende à rapprocher l'organe de verrouillage et l'organe de verrouillage complémentaire, empêchant de se fait la désolidarisation du groupe par rapport au respectable sous l'effet de la force de poussée. Les moyens de verrouillage assurent ainsi une fonction de verrouillage et une fonction de maintien en position efficace sous l'effet de la force de poussée.
- le groupe comprend une ceinture périphérique entourant la chambre d'infusion et le dispositif de fermeture et d'ouverture de la chambre d'infusion, ladite ceinture périphérique portant les deux organes de verrouillage formant pênes disposés de manière symétrique sur la ceinture. L'avantage conféré est d'inclure les organes de verrouillage dans la ceinture ce qui permet de ne pas accroître l'encombrement du groupe d'infusion.
- les organes de verrouillage formant pênes sont montés coulissants sur la ceinture. Un mouvement coulissant permet une réalisation facile et sûre de l'action de verrouillage.
- la ceinture comprend des nervures s'étendant dans le sens du coulissement et l'organe de verrouillage formant pêne comprend des reliefs complémentaires aux nervures et configurés pour assurer le guidage en translation dudit organe sur la ceinture. Le coulissement sur des nervures permet un meilleur guidage de l'organe. De plus, ces nervures peuvent avoir une autre fonction, par exemple celle de renforcer la ceinture et permettent ainsi d'obtenir deux fonctions avec un même élément.
- les moyens d'actionnement de l'ensemble sont configurés pour être actionnés manuellement par l'opérateur, de préférence avec une seule main.
- en position de déverrouillage des moyens de verrouillage, le groupe peut être séparé manuellement du réceptacle. Ceci procure une manipulation aisée du groupe d'infusion par un opérateur sans impliquer l'emploi d'outil spécifique.
- les moyens d'actionnement sont portés par le groupe et comprennent un élément de commande manuel tel qu'une poignée ou un bouton destiné à être tiré, pressé ou tourné, ledit élément de commande étant articulé sur le groupe et configuré pour participer, au moins en partie, à la préhension du groupe en vue de sa séparation du réceptacle. Un élément de commande sous la forme d'une poignée ou d'un bouton permet à l'opérateur une facilité d'actionnement des moyens de verrouillage.
- l'élément de commande est une poignée configurée pour se déplacer lors de son actionnement et comprenant une surface inclinée agencée pour coopérer avec une surface inclinée portée par les moyens de verrouillage associés de sorte que le déplacement de la poignée entraîne un déplacement des moyens de verrouillage. La coopération entre surfaces inclinées dont l'une forme une rampe pour le déplacement de l'autre sur elle permet l'actionnement des moyens de verrouillage par l'élément de commande sans nécessiter d'éléments intermédiaires.
- la poignée est montée coulissante sur le groupe.
- l'ensemble est configuré de sorte qu'un coulissement de la poignée entraîne un coulissement des moyens de verrouillage associés selon une direction perpendiculaire à celle de la poignée. Ceci présente l'avantage de pouvoir permettre un coulissement des moyens de verrouillage dans un plan horizontal tandis que la poignée coulisse dans un plan vertical, ce qui est le coulissement le plus adapté pour une poignée.
- un organe de préhension est fixé au groupe et conformé de sorte qu'un utilisateur puisse appréhender simultanément et avec une même main l'élément de commande et l'organe de préhension. Ainsi les moyens d'actionnement peuvent réaliser aussi l'enlèvement du groupe d'infusion hors du réceptacle et effectuer une seconde fonction, ce qui représente une simplification des moyens mis en oeuvre pour l'enlèvement du groupe par la réutilisation d'autres moyens déjà présents sur le groupe.
- le groupe est agencé de sorte qu'une pression appliquée sur l'élément de commande autorise la désolidarisation du groupe par rapport au réceptacle et qu'une traction exercée sur l'organe de préhension sépare le groupe du réceptacle. Ainsi, les moyens d'actionnement sont opérationnels par pression et les moyens d'enlèvement du groupe d'infusion du réceptacle sont opérationnels par traction, ces deux mouvements étant particulièrement appropriés pour un élément de commande tel qu'une poignée, le mouvement par traction étant aussi le mouvement le plus adéquat pour l'enlèvement du groupe d'infusion du réceptacle le recevant.
- le groupe est agencé de sorte que lors du passage de la position de verrouillage à la position de déverrouillage, la partie de l'élément de commande actionnée par l'opérateur se rapproche d'une surface de préhension prévue sur l'organe. Ainsi, ces deux éléments formant les moyens d'enlèvement sont au même niveau et peuvent être saisis simultanément par un opérateur.
- la surface de préhension forme une poignée additionnelle complémentaire de l'élément de commande des moyens d'actionnement. Ceci rend encore plus facile le mouvement d'enlèvement du groupe d'infusion,
- l'ensemble comprend des moyens de rappel configurés pour amener les moyens de verrouillage ou les moyens d'actionnement respectivement en position de verrouillage ou en position de désactivation. Ainsi, les moyens de verrouillage peuvent servir à maintenir la poignée solidaire du groupe d'infusion lors de l'enlèvement de celui-ci et les moyens d'actionnement sont prêts pour assurer un nouveau cycle d'actionnement.
- le réceptacle comprend deux connecteurs hydrauliques et le groupe comprend deux connecteurs complémentaires pour assurer l'alimentation hydraulique du groupe, chaque connecteur du groupe étant conformé pour coopérer avec un connecteur du réceptacle afin de former deux connexions hydrauliques. Le groupe est alimenté en fluide sous pression par au moins l'un de ses connecteurs. Les moyens de verrouillage sont répartis de part et d'autre des connecteurs en empêchant ainsi la rotation du groupe sous l'effet de la pression du fluide alimentant ledit groupe. Ceci accroît la stabilité et la résistance du groupe d'infusion lors de l'alimentation hydraulique. De préférence, des logements portés par le réceptacle de part et d'autre des connecteurs forment chacun une butée d'arrêt en rotation ou en translation pour le groupe lorsqu'ils coopèrent avec un penne. Avantageusement, les logements sont portés par les surfaces du réceptacle les plus éloignées de l'axe de symétrie séparant les connecteurs. De même, les pennes sont portés par les parois de la ceintures les plus éloignées de l'axe de symétrie séparant les connecteurs complémentaire. Cette disposition permet de bénéficier d'un bon effet de levier pour s'opposer à la rotation du groupe sous l'effet de la pression du fluide circulant dans les connecteurs.
- l'ensemble comporte des moyens de solidarisation amovibles agencés pour assurer sa solidarisation amovible sur un bâti de la machine. Ainsi, l'ensemble peut aussi facilement être enlevé de la machine.

L'invention concerne aussi une machine de préparation de boissons par extraction d'un produit à infuser, caractérisée en ce qu'elle comprend un tel ensemble.

L'invention a également pour objet un procédé d'assemblage d'un ensemble selon l'une quelconque des caractéristiques précédentes comprenant les étapes suivantes : on active les moyens d'actionnement ; on dispose le groupe sur ou dans le réceptacle ; on désactive les moyens d'actionnement de sorte que les moyens de verrouillage empêchent la désolidarisation du groupe par rapport au réceptacle.

L'avantage procuré par la présence de moyens d'actionnement pour l'activation du verrouillage ou du déverrouillage des moyens de verrouillage est que ces moyens d'actionnement peuvent être rendus plus facilement accessibles à un opérateur que ne le seraient les moyens de verrouillage qui sont principalement logés entre groupe d'infusion et réceptacle et donc difficiles d'accès.

Un autre avantage de la présente invention est la possibilité de combiner les moyens d'actionnement avec les moyens de déplacement du groupe d'infusion hors de son réceptacle.

Un autre avantage de la présente invention est d'utiliser des éléments déjà prévus pour réaliser une autre fonction dans le groupe d'infusion afin de réaliser une partie des moyens de verrouillage.

D'autres caractéristiques, buts et avantages de la présente invention apparaîtront à la lecture de la description détaillée qui va suivre, et en regard des dessins annexés, donnés à titre d'exemples non limitatifs et sur lesquels :

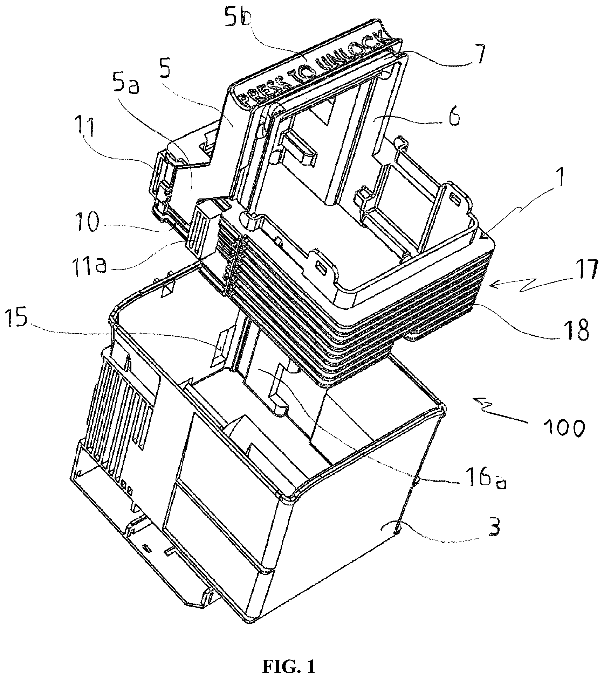

- la figure 1 est une vue de dessus en perspective selon un premier angle de vue d'un exemple d'ensemble selon la présente invention formé d'un groupe d'infusion amovible destiné à être reçu à l'intérieur d'un réceptacle, le groupe d'infusion étant montré espacé de son réceptacle,

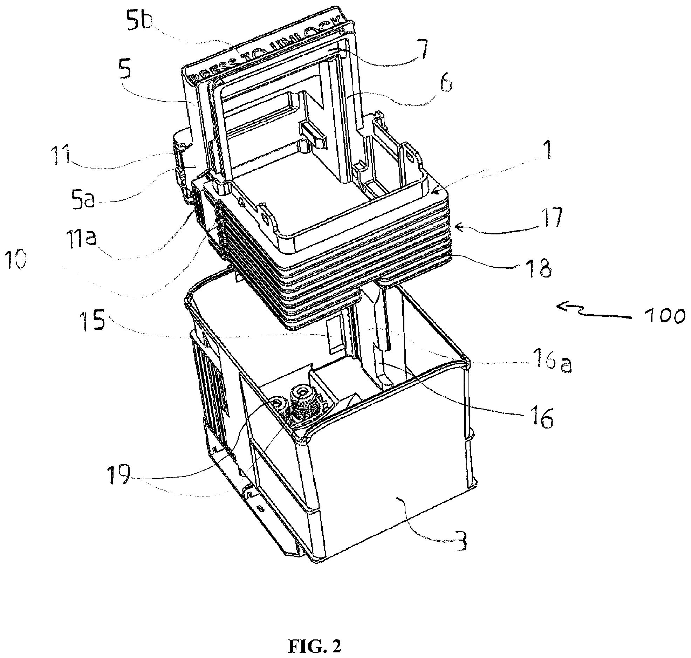

- la figure 2 est une vue en perspective selon un second angle de l'ensemble illustré en figure 2,

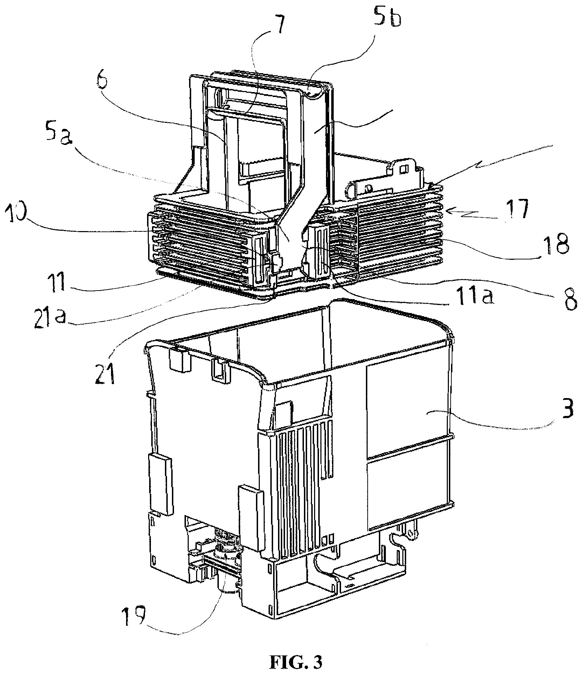

- la figure 3 est une vue en perspective selon un troisième angle de l'ensemble illustré en figure 2,

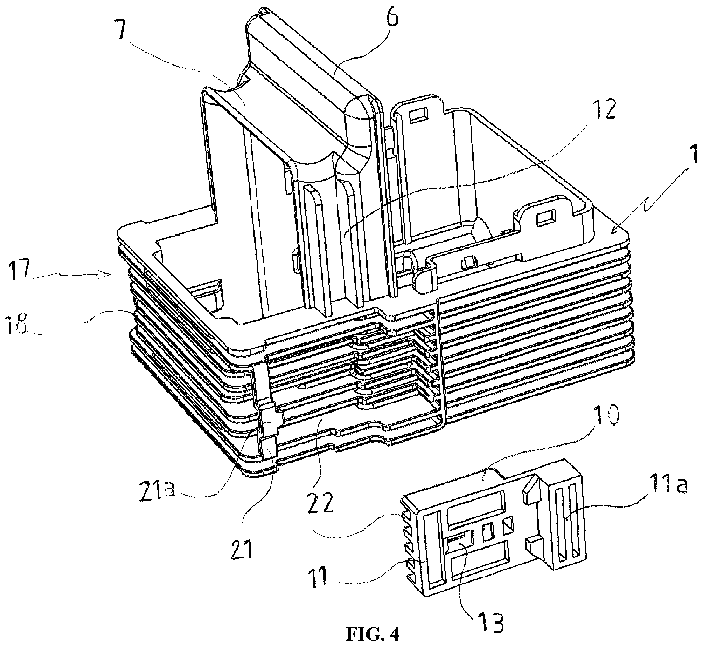

- la figure 4 est une vue en perspective latérale d'un groupe d'infusion faisant partie de l'ensemble selon la présente invention, ce groupe étant muni d'un organe de verrouillage dudit groupe sur son réceptacle, l'organe de verrouillage étant, à cette figure, montré espacé de son logement de réception aménagé dans le groupe d'infusion,

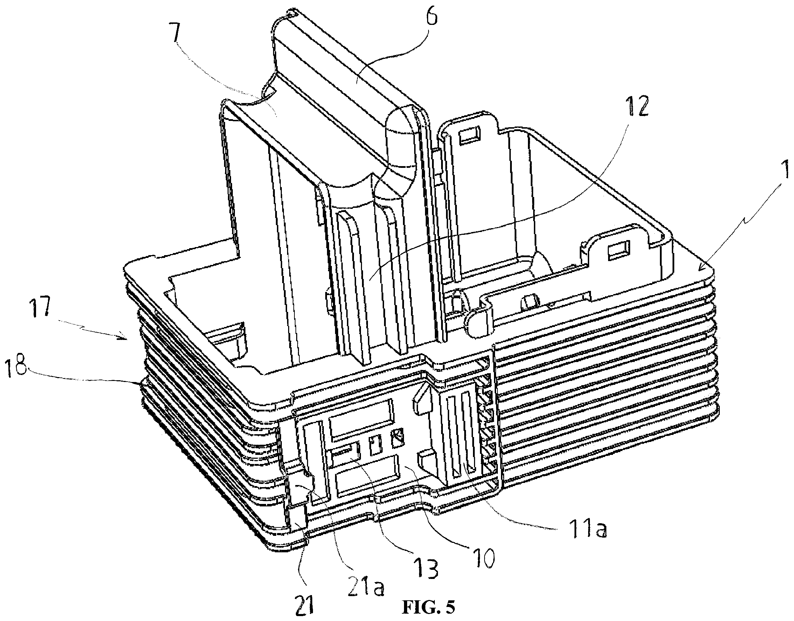

- la figure 5 est une vue en perspective latérale d'un groupe d'infusion faisant partie de l'ensemble selon la présente invention, ce groupe étant muni d'un organe de verrouillage dudit groupe sur son réceptacle, l'organe de verrouillage étant en place dans son logement de réception aménagé dans le groupe d'infusion, ceci dans une première position correspondant à un déverrouillage du groupe par rapport à son réceptacle,

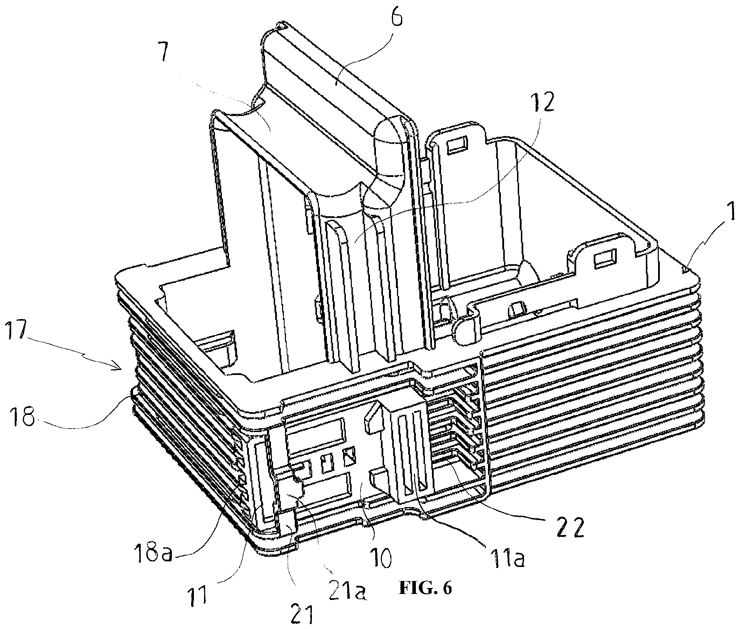

- la figure 6 est une vue en perspective latérale du groupe illustré en figure 5 dans une seconde position intermédiaire entre positions de repos et de verrouillage du groupe par rapport à son réceptacle,

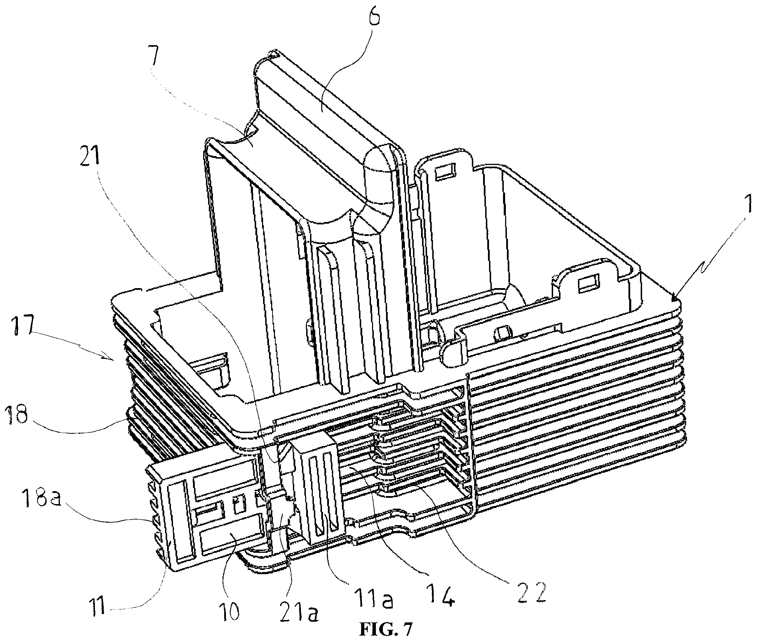

- la figure 7 est une vue en perspective latérale du groupe illustré en figure 5 dans une troisième position correspondant à un verrouillage du groupe par rapport à son réceptacle,

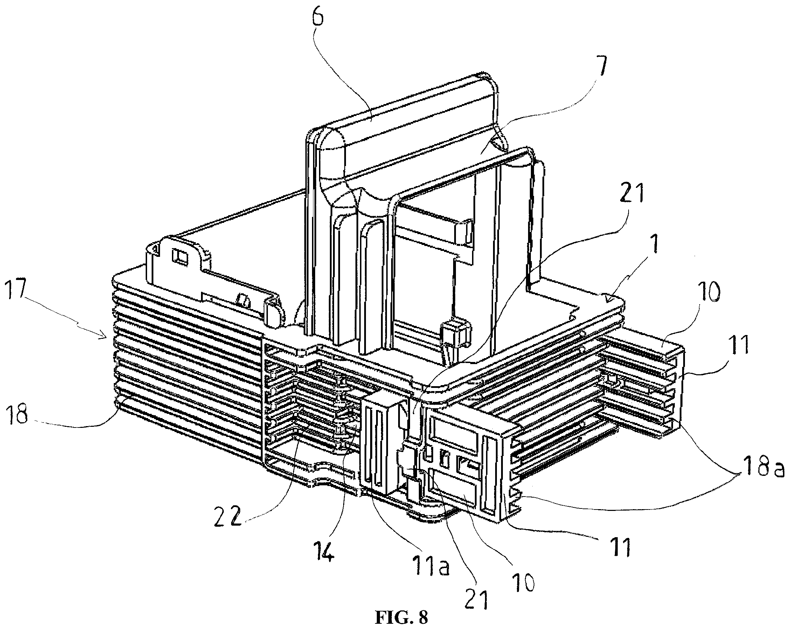

- la figure 8 est une vue de trois quart avant en perspective du groupe d'infusion dans leur troisième position correspondant à un verrouillage du groupe par rapport à son réceptacle,

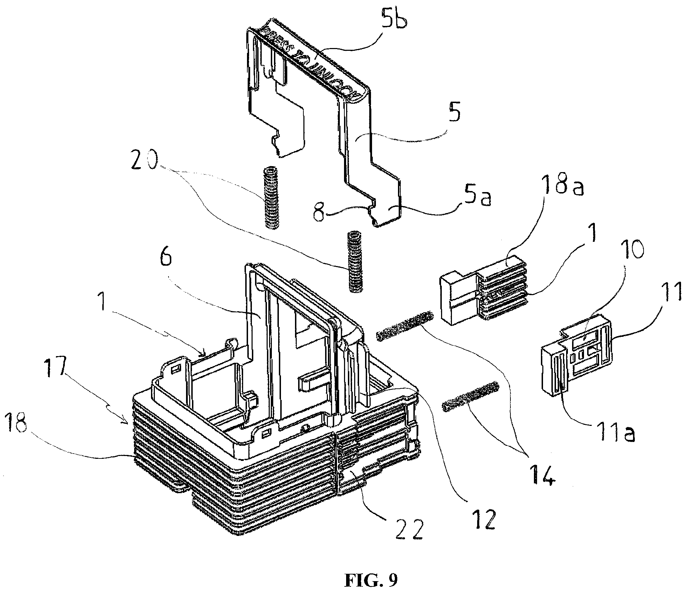

- la figure 9 est une vue plongeante en perspective d'un groupe d'infusion faisant partie de l'ensemble selon la présente invention, montrant notamment la poignée et les organes de verrouillage dudit groupe avec leurs éléments respectifs de rappel verticaux et horizontaux, les organes de verrouillage, la poignée et leurs éléments de rappel étant illustrés espacés dudit groupe,

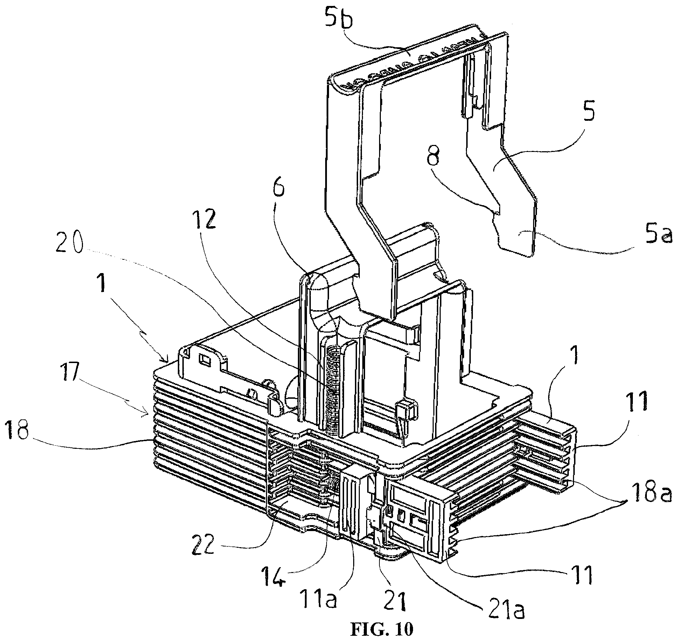

- la figure 10 est une vue en perspective selon le même angle que la figure 8 d'un groupe d'infusion faisant partie de l'ensemble selon la présente invention, les éléments de rappel verticaux et horizontaux étant montrés mis en position dans ledit groupe, les organes de verrouillage dans leur position de verrouillage et la poignée étant montrée espacée dudit groupe,

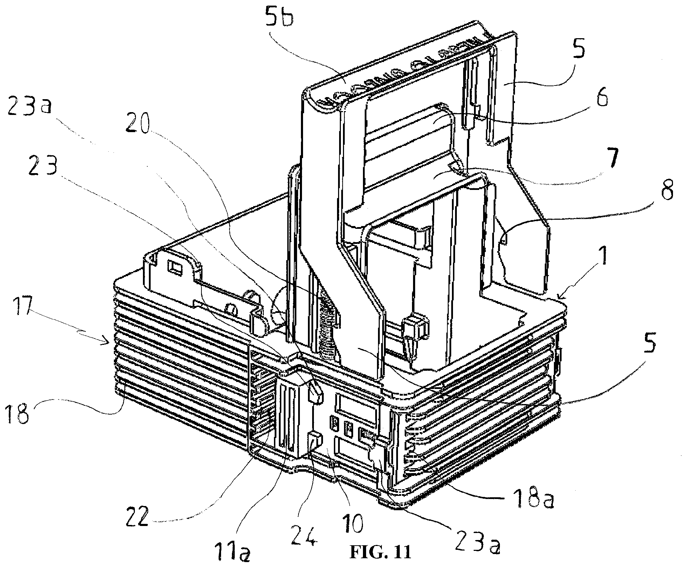

- la figure 11 est une vue en perspective selon le même angle de vue que la figure 10 d'un groupe d'infusion faisant partie de l'ensemble selon la présente invention, la poignée étant montrée non introduite dans la ceinture du groupe d'infusion et les organes de verrouillage étant montrés dans leur position de repos,

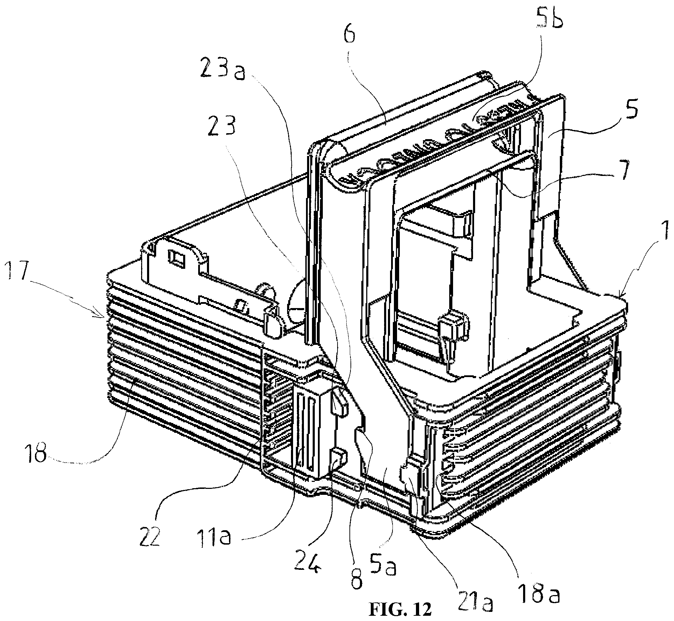

- la figure 12 est une vue en perspective selon le même angle de vue que la figure 10 d'un groupe d'infusion faisant partie de l'ensemble selon la présente invention, la poignée étant montrée introduite dans la ceinture du groupe d'infusion dans une position de travail intermédiaire avec ses extrémités inférieures logées dans l'organe de verrouillage, les organes de verrouillage étant montrés dans leur position de repos,

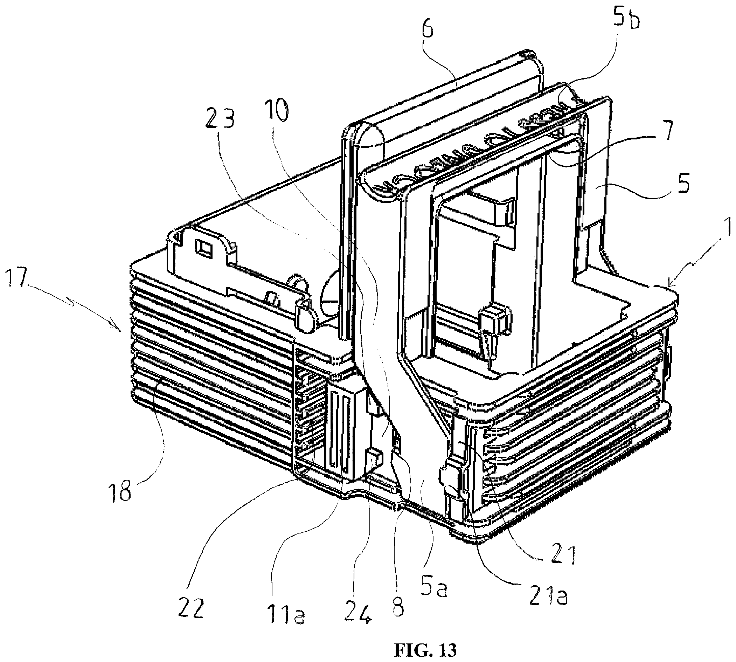

- la figure 13 est une vue en perspective selon le même angle de vue que la figure 10 d'un groupe d'infusion faisant partie de l'ensemble selon la présente invention, la poignée étant montrée dans sa position d'activation correspondant à son actionnement pour le déverrouillage des organes de verrouillage avec ses extrémités inférieures logées dans l'organe de verrouillage en ayant été descendues en comparaison de la figure 12, les organes de verrouillage étant montrés dans leur position de repos,

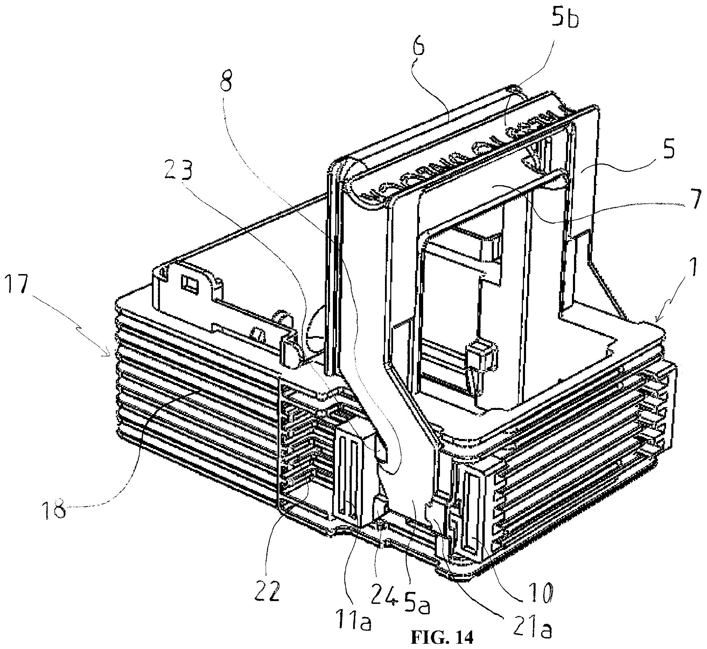

- la figure 14 est une vue en perspective selon le même angle de vue que la figure 10 d'un groupe d'infusion faisant partie de l'ensemble selon la présente invention, la poignée étant montrée dans sa position désactivée avec ses extrémités inférieures logées dans l'organe de verrouillage, les organes de verrouillage étant alors dans une position de verrouillage du groupe d'infusion avec solidarisation des extrémités inférieures de la poignée et de l'organe de verrouillage respectif,

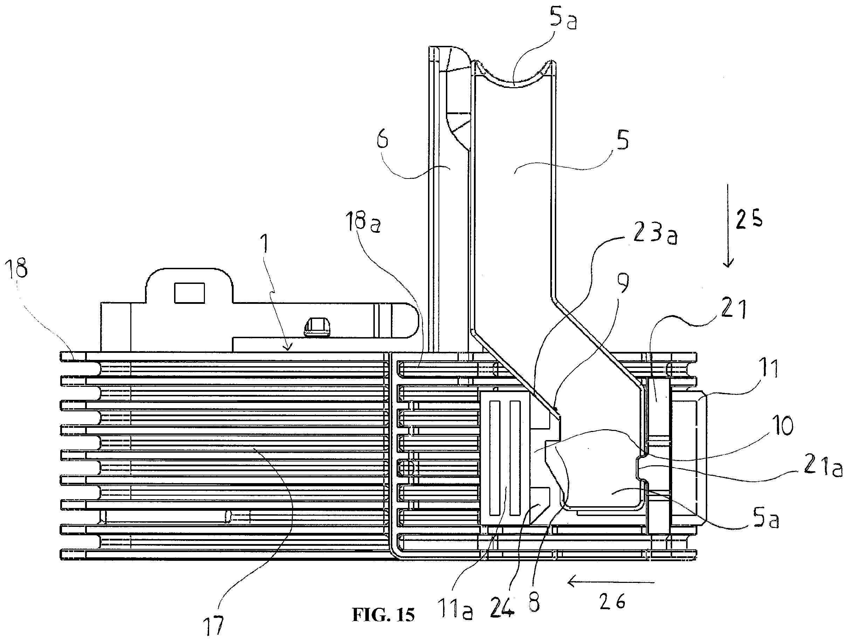

- la figure 15 est une vue latérale d'une partie du groupe d'infusion faisant partie de l'ensemble selon la présente invention, montrant notamment la liaison extrémité inférieure de la poignée avec organe de verrouillage correspondant, ceci dans une position intermédiaire de descente de la poignée, avec les organes de verrouillage non encore en position verrouillée,

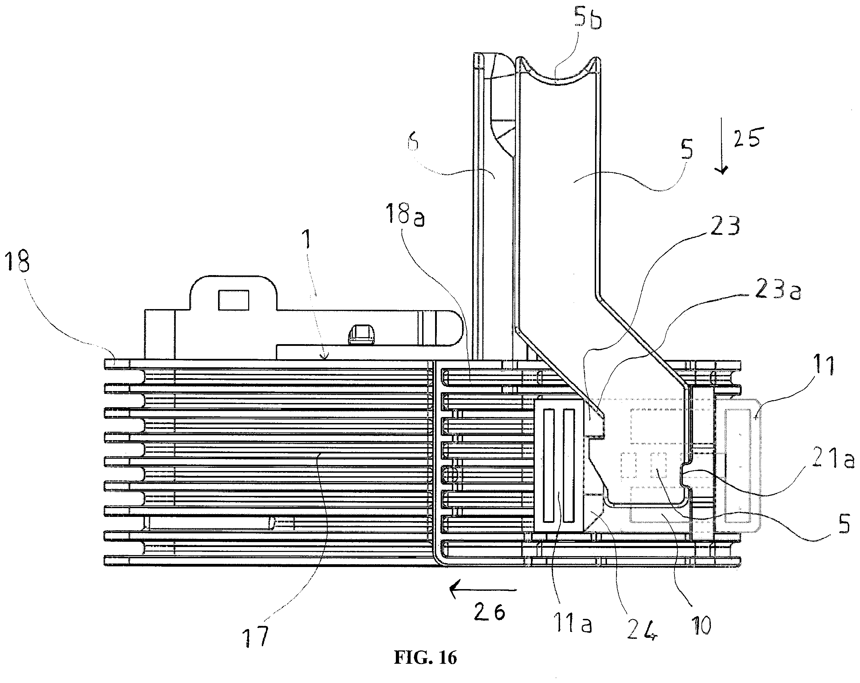

- la figure 16 est une vue latérale de la partie du groupe montrée à la figure 15, montrant notamment une extrémité inférieure de la poignée et son organe de verrouillage correspondant, ceci dans une position de solidarisation de l'extrémité inférieure de la poignée avec l'organe de verrouillage respectif, les organes de verrouillage étant alors en position de verrouillage,

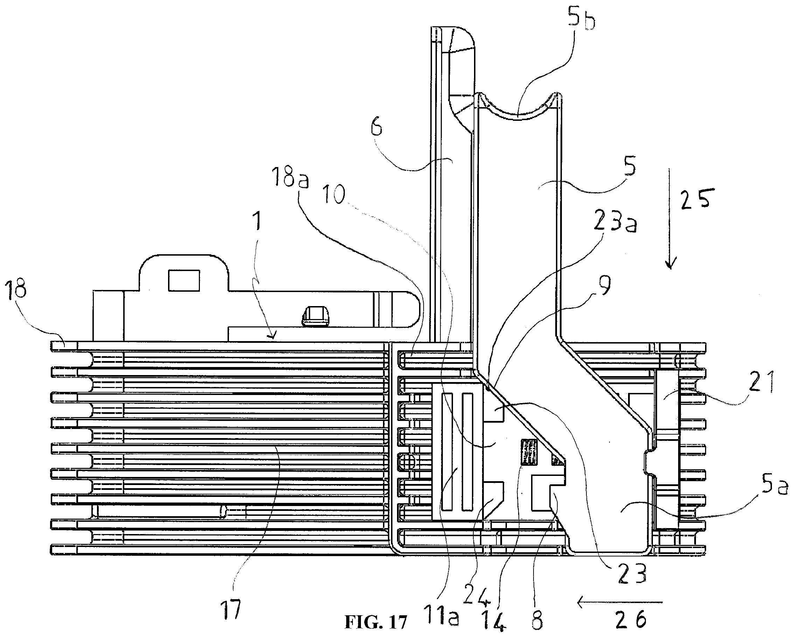

- la figure 17 est une vue latérale de la partie du groupe montrée aux figures 15 et 16, montrant notamment une extrémité inférieure de la poignée plus profondément descendue dans l'organe de verrouillage associé que pour ces figures, la descente de la poignée ayant provoqué le déverrouillage de l'organe de verrouillage,

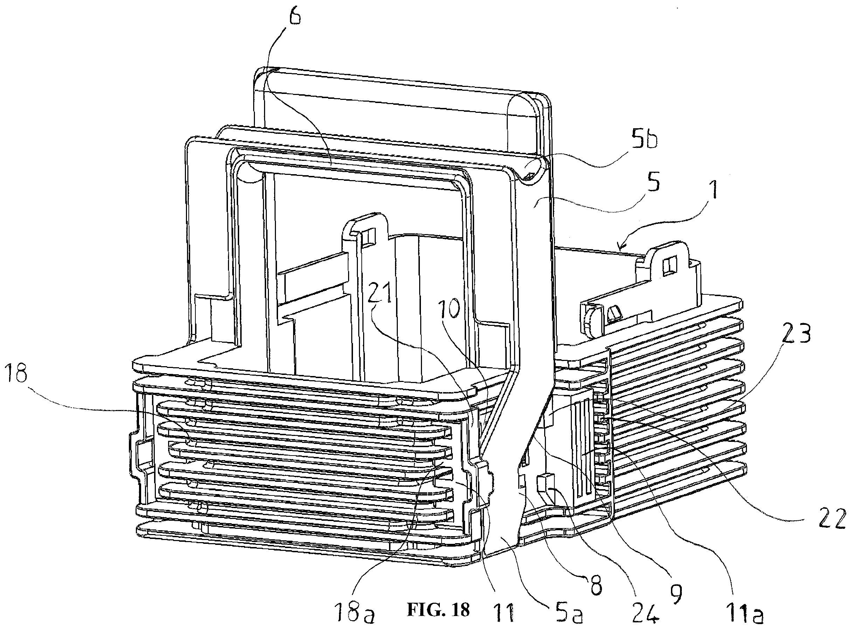

- la figure 18 est une vue avant en perspective du groupe d'infusion amovible faisant partie de l'ensemble selon la présente invention, avec les extrémités inférieures de la poignée profondément descendues dans l'organe de verrouillage associé dans une position correspondant à celle montrée à la figure 17, les organes de verrouillage ayant été alors ramenés en position de repos,

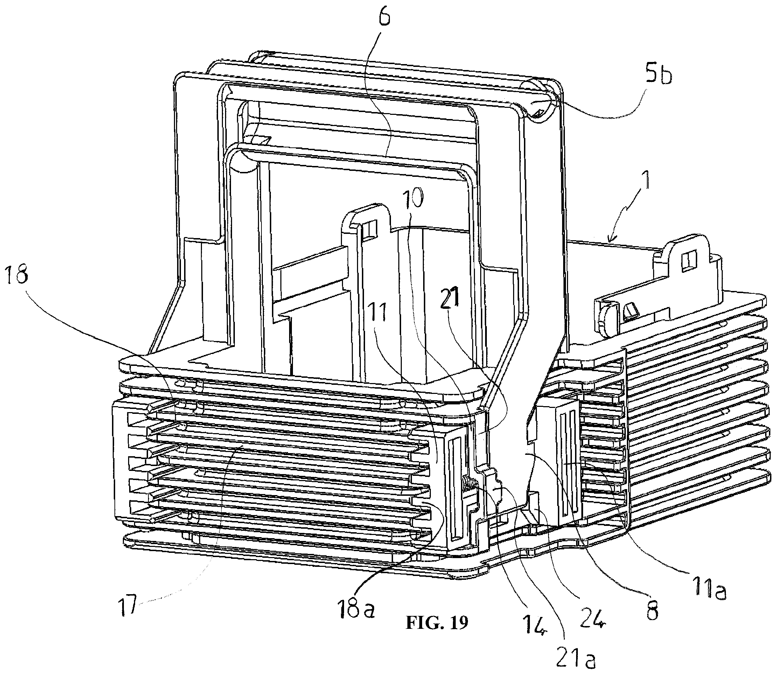

- la figure 19 est une vue avant en perspective du groupe d'infusion amovible faisant partie de l'ensemble selon la présente invention, les extrémités inférieures de la poignée étant solidaires de l'organe de verrouillage correspondant, les organes de verrouillage étant alors en position de verrouillage du groupe d'infusion sur son réceptacle non montré à cette figure, ladite position de la poignée et des organes de verrouillage étant similaire à celle montrée à la figure 16.

En référence aux figures 1 à 19, on a illustré des exemples de mise en oeuvre de l'invention pour un ensemble pour machine de préparation de boissons par extraction d'un produit à infuser. En se référant particulièrement aux figures 1 à 3, cet ensemble 100 comprend un groupe 1 d'infusion et un réceptacle 3 pouvant loger le groupe 1 d'infusion. Ce réceptacle 3 de l'ensemble 100 sert ainsi d'élément support pour le groupe 1 d'infusion de même que d'élément d'alimentation en eau chaude sous pression, l'ensemble 100 jouant le rôle de base d'accueil pour le groupe 1 d'infusion.

Le groupe 1 d'infusion peut être au moins équipé d'une chambre d'extraction et d'un dispositif d'ouverture et de fermeture de la chambre, cette chambre et ce dispositif, n'étant pas montrés aux figures, sont reçus dans l'espace interne creux 2 du groupe 1 d'infusion.

La chambre d'extraction à l'intérieur du groupe d'infusion peut se composer d'une demi chambre d'infusion fixe contre laquelle vient s'appuyer une demi chambre d'infusion mobile entraînée en translation par un vérin hydraulique assurant également la fermeture étanche de la chambre pendant la phase d'infusion du produit emprisonné entre les deux demi chambres, cette infusion se faisant sous haute pression. Le produit est avantageusement contenu dans une dose, cette dose prenant par exemple la forme d'une dosette. Référence sera faite au document WO-A-2008/142040 pour la description d'une telle machine de fabrication de boissons.

La présente invention s'applique quel que soit le type de dose. Elle s'applique notamment aux doses présentant une enveloppe extérieure souple, aux doses présentant une enveloppe extérieure rigide de type capsule, aux doses dont l'enveloppe extérieure est apte à disparaître au moins en partie lors de l'infusion, par dissolution par exemple. Elle s'applique encore aux doses formées d'un produit à infuser agrégé par un liant et/ou par l'application d'une pression. Une telle dose formée d'un agrégat de produit à infuser tel que le café peut être constituée en dehors de la machine ou être constituée par un module dédié de la machine.

Lors de l'infusion du produit, le système hydraulique subit une poussée verticale proportionnelle à sa surface projetée et à la pression de l'eau qui le traverse. Cette poussée hydraulique verticale est, par exemple, très importante lors de l'infusion de café expresso qui nécessite une pression supérieure à 8 bars voire supérieure à 15 bars ou 20 bars.

Il convient d'assurer un maintien du groupe 1 d'infusion amovible alors placé dans le réceptacle 3 contre la poussée hydraulique haute pression durant l'infusion et/ou durant la phase de poussée du vérin ceci sans augmenter son volume ni recourir à l'utilisation de pièces métalliques. Ce maintien du groupe 1 d'infusion dans la machine nécessite une reprise des efforts par un ensemble d'accrochage robuste qui doit néanmoins rester facilement manipulable par l'utilisateur final de la machine. En outre, ce maintien ne doit pas augmenter l'encombrement du groupe 1 d'infusion ni gêner son assemblage ou son désassemblage du réceptacle 3.

Pour ce faire, il est prévu une ceinture 17 avantageusement fermée entourant la périphérie externe du groupe 1 d'infusion. Cette ceinture 17 est avantageusement réalisée exclusivement en matière plastique technique et comporte des nervures de renfort 18 sur son pourtour pour tenir les contraintes énormes lors de l'infusion à plus de 20 bars. Ces nervures 18 s'étendent avantageusement sur chaque côté de la ceinture 17 dans la longueur dudit côté.

Pour la présente invention, le groupe 1 d'infusion est rendu amovible du réceptacle 3 afin de permettre d'assurer son nettoyage, sa maintenance ou le recyclage de la machine le contenant en fin de vie.

Selon la présente invention, le réceptacle 3 est solidaire de la machine de préparation de boissons par extraction d'un produit à infuser et présente un espace interne creux 4 qui reçoit la majeure partie du groupe 1 d'infusion en l'entourant sur tout son pourtour extérieur. Des moyens de verrouillage 10, 15, 16 associés, répartis entre le groupe 1 et le réceptacle 3 sont en outre prévus ainsi que des moyens d'actionnement 5 portés par l'un parmi le groupe 1 et le réceptacle 3, ces moyens d'actionnement 5 commandant les moyens de verrouillage 10, 15 et 16. Dans une position de désactivation des moyens d'actionnement 5, les moyens de verrouillage 10, 15 et 16 empêchent la désolidarisation du groupe 1 par rapport au réceptacle 3 et dans une position d'activation des moyens d'actionnement 5, les moyens de verrouillage 10, 15 et 16 autorisent la désolidarisation du groupe 1 par rapport au réceptacle 3.

Ce qui est entendu par activation et désactivation des moyens d'actionnement 5 sera ultérieurement expliqué en référence à l'interaction des moyens d'actionnement avec une partie 10 des moyens de verrouillage 10, 15, 16.

L'amovibilité du groupe 1 d'infusion nécessite, en outre, une déconnexion des arrivées hydrauliques nécessaires au fonctionnement du vérin et de la chambre d'infusion comprise dans le groupe 1 d'infusion. La déconnexion des arrivées hydrauliques s'effectue par des connecteurs verticaux installés sous le groupe 1 d'infusion, ces connecteurs 19 étant montrés à la figure 2 dans l'espace interne 4 du réceptacle 3 traversant le fond de celui-ci.

En se référant aux divers modes de réalisation de l'invention, les moyens de verrouillage 10, 15, 16 vont maintenant être d'abord décrits, ensuite les moyens d'actionnement 5 et enfin l'interaction des moyens d'actionnement avec une partie 10 des moyens de verrouillage 10, 15, 16.

Dans ce qui va suivre, il sera fait référence aux côtés latéraux du groupe 1 d'infusion pour désigner les côtés sur lesquels coulisse respectivement un organe de verrouillage 10, le côté avant du groupe 1 d'infusion pour celui par lequel sortent ces organes de verrouillage 10 en position verrouillée du groupe 1 d'infusion. La partie inférieure du groupe 1 d'infusion sera celle tournée vers le réceptacle 3 et la plus proche de celui-ci. Il en va de même pour les côtés correspondants du réceptacle 3. Les appellations interne ou externe pour des éléments correspondent à une place respectivement tournée vers le ou opposée au groupe d'infusion.

Aux figures, les moyens de verrouillage comprennent au moins un organe de verrouillage 10, articulé sur l'un parmi le groupe 1 d'infusion et le réceptacle 3. Cet organe de verrouillage 10 est porté par le groupe 1 d'infusion et est sous la forme d'un organe de verrouillage formant pêne 10. Cet organe de verrouillage formant pêne 10 est reçu dans un évidement 22 pratiqué dans la ceinture 17, ledit organe pouvant être ainsi logé dans la ceinture 17 et ne pas dépasser latéralement de la ceinture 17.

Comme visible aux figures 1 à 3, l'organe de verrouillage formant pêne 10 est configuré pour venir en prise avec un organe de verrouillage complémentaire 15 ou 16 porté par le réceptacle 3, cet organe complémentaire formant gâche. Cet organe de verrouillage complémentaire formant gâche 15 ou 16 peut être avantageusement sous la forme d'au moins un logement 15 ou 16 recevant une partie de l'organe de verrouillage formant pêne 10.

Ainsi aux figures 1 à 3, il est prévu deux organes de verrouillage formant pênes 10 sur le groupe 1 d'infusion, dont un seul est visible aux figures 1 et 2, chacun des pênes 10 étant associé à un côté latéral du groupe 1 d'infusion. Chaque organe de verrouillage formant pêne 10 coopère avec un logement 15 prévu sur le réceptacle 3, dont deux sont visibles à la figure 3 et un seul aux figures 1 et 2, ce logement 15 réalisant l'organe de verrouillage formant gâche. Il est à noter qu'aux figures 1 et 2, le logement référencé 15 ne coopère pas avec le pêne montré à cette figure et référencé 10 mais avec le pêne se trouvant sur l'autre côté latéral du groupe 1 d'infusion.

Aux figures 8 à 14, un organe de verrouillage formant pêne 10 sur chacun des côtés latéraux d'un groupe 1 d'infusion est particulièrement bien visible pour le détail de ses éléments constitutifs.

Le groupe comprend au moins un connecteur hydraulique et le réceptacle comprend au moins un connecteur complémentaire pour assurer l'alimentation hydraulique du groupe. Typiquement, ce connecteur assure l'alimentation en eau de la chambre d'extraction. Il peut également assurer l'alimentation en eau d'un vérin porté par le groupe. De préférence, une pompe est disposée en amont du groupe. Elle permet d'alimenter le groupe en fluide sous pression. Le connecteur du groupe et le connecteur complémentaire du réceptacle sont conformés pour définir une direction de poussée pour un fluide sous pression injecté dans le groupe. Typiquement, pour un connecteur sensiblement cylindrique, la direction de poussée est parallèle à l'axe du cylindre. Sur la figure 2, deux connecteurs 19, 19 complémentaires sont représentés. Ils définissent chacun une direction de poussée sensiblement verticale. Avantageusement, l'organe de verrouillage et l'organe de verrouillage complémentaire sont configurés de sorte que la force de poussée exercée sur le groupe lors de l'injection du fluide sous pression tende à rapprocher l'organe de verrouillage et l'organe de verrouillage complémentaire, assurant ainsi la solidarisation du groupe sur le réceptacle. De préférence, l'au moins un organe de verrouillage est configuré pour coulisser selon une direction perpendiculaire à ladite direction de poussée. Sur les figures, l'organe de verrouillage 10 coulisse selon une direction sensiblement horizontale. Il s'oppose ainsi à la désolidarisation du groupe sous l'effet de la force de poussée.

En se référant à nouveau à la figure 2, dans le cas du verrouillage par pêne 10 et gâche 15, c'est la partie avant 11 du pêne 10 qui pénètre lors de son déplacement dans le logement associé, non visible à la figure 1 et disposé symétriquement de l'autre côté latéral du réceptacle 3 que le logement 15.

Comme visible à la figure 1, il peut être prévu un second organe de verrouillage formant gâche 16 sur le réceptacle 3, cette seconde gâche 16 étant disposée sur une paroi latérale du réceptacle 3. Cette seconde gâche 16 est réalisée par un découpage formant logement 16 pour une partie de l'organe de verrouillage formant pêne 10, ce découpage étant réalisé dans une pièce 16a servant de butée latérale à l'organe de verrouillage formant pêne 10 quand celui-ci est en position de verrouillage. Avantageusement, c'est une partie 11 a du pêne 10 faisant saillie latéralement du pêne 10 qui bute dans la pièce 16a, ceci contre les contours du logement 16 après avoir pénétré dans ce logement 16 configuré à ses dimensions. De nouveau, comme pour le logement 15, le logement 16 n'est pas associé au pêne référencé 10 à cette figure mais au pêne se trouvant sur l'autre côté latéral du groupe 1 d'infusion.

Ainsi, la venue en prise de l'organe de verrouillage formant pêne 10 avec l'organe de verrouillage complémentaire formant gâche 15 ou 16 associé réalise la solidarisation du groupe 1 d'infusion par rapport au réceptacle 3 et empêche leur désolidarisation tant que l'organe de verrouillage formant pêne 10 est maintenu en position dans l'organe de verrouillage complémentaire formant gâche 15 ou 16. Il est possible de n'utiliser qu'un logement formant gâche 15 ou 16 sur le réceptacle 3 ou d'utiliser les deux logements 15 ou 16 simultanément pour réaliser le verrouillage du groupe 1 d'infusion sur le réceptacle 3.

En ce qui concerne le déplacement d'un organe de verrouillage 10 porté par le groupe 1 d'infusion sur ledit groupe 1, ce déplacement se fait par coulissement de l'organe 10 sur l'extérieur d'un côté latéral dudit groupe 1 mais ce n'est pas forcément toujours le cas.

Comme précédemment mentionné, le groupe 1 d'infusion peut comprendre une ceinture périphérique 17 délimitant son espace interne 2 recevant la chambre d'infusion et le dispositif de fermeture et d'ouverture de la chambre d'infusion. Il est avantageux que ladite ceinture périphérique 17 porte au moins l'organe ou des organes de verrouillage 10 associés au groupe 1 d'infusion, ces organes 10 étant disposés de manière symétrique sur la ceinture 17.

Pour ce faire, la ceinture 17 comprend des nervures longitudinales 18 s'étendant dans le sens du coulissement et l'organe de verrouillage formant pêne 10 comprend sur sa face interne tournée vers la ceinture 17 des reliefs complémentaires 18a des nervures 18 et configurés pour assurer le guidage en translation dudit organe 10. Ces profils complémentaires 18a peuvent par exemple être sous forme de nervures longitudinales adaptées aux nervures 18 de la ceinture 17, ces nervures 18a coulissant entre les nervures longitudinales 18 de la ceinture. Ceci peut être notamment vu sur les figures 4, 8 à 10 quand l'organe de verrouillage formant pêne 10 est montré à distance du groupe 1 d'infusion ou ayant coulissé en position de verrouillage par rapport à la ceinture 17 dudit groupe 1.

L'utilisation de nervures 18 prévues sur la ceinture 17 est une caractéristique particulièrement avantageuse mais non limitative de la présente invention. Ainsi, les nervures longitudinales 18 de renfort de la ceinture 17 du groupe 1 d'infusion précédemment décrites peuvent aussi être utilisées pour réaliser le déplacement de l'organe ou des organes de verrouillage formant pênes 10. Ces nervures 18 effectuent donc une double fonction, la première étant de renforcer le groupe 1 d'infusion comme précédemment mentionné et la seconde étant de permettre le déplacement des organes de verrouillage 10 associés à ce groupe 1.

Avantageusement, les organes de verrouillage formant pênes 10 sont réalisés dans la même matière plastique technique que les nervures 18. Il est aussi possible que les deux organes de verrouillage formant pênes 10, chacun sur un côté latéral de la ceinture 17, puissent former une seule et même pièce totalement symétrique.

Pendant les phases d'infusion, le ou les organes de verrouillage formant pênes 10 sont solidaires de la ceinture 17 et assurent son maintien par rapport au réceptacle 3 de la machine sans augmenter l'encombrement du groupe 1 d'infusion dont la forme reste globalement parallélépipédique. La mobilité en translation de l'organe ou des organes de verrouillage formant pênes 10 leur permet d'être rétractables lors de l'extraction du groupe 1 d'infusion, ce retrait s'effectuant par un moyen d'actionnement 5 qui sera ultérieurement décrit.

Comme particulièrement visible aux figures 9 et 17, il est avantageusement prévu un ressort 14 s'étendant selon la longueur du côté latéral du groupe 1 d'infusion, c'est à dire sensiblement en direction horizontale quand l'ensemble selon l'invention repose sur un plan horizontal, ledit ressort 14 se trouvant à l'intérieur d'un organe de verrouillage formant pêne 10. Le ressort est introduit dans l'organe de verrouillage formant pêne 10 par un orifice pratiqué dans celui-ci et référencé 13 aux figures 4 à 5, cet orifice 13 faisant communiquer la surface externe de l'organe 10 avec sa surface interne appliquée contre la ceinture 17.

Comme visible notamment aux figures 10 et 7, le ressort 14 est intercalé entre, d'une part, la partie de l'organe de verrouillage formant pêne 10 la plus interne au logement 22, à ces figures la face arrière de la partie 11a faisant saillie latéralement de l'organe de verrouillage 10 et, d'autre part, un élément du logement 22 se trouvant vers l'arrière de celui-ci, le ressort 14 rappelant en position verrouillée l'organe de verrouillage formant pêne 10.

Les moyens d'actionnement 5 vont maintenant être décrits.

Comme il est visible notamment à la figure 2, ces moyens d'actionnement comprennent un élément de commande sous la forme d'une poignée 5, cet élément de commande servant à libérer les moyens de verrouillage 10, 15 et 16 par action sur l'organe de verrouillage 10 de leur position verrouillée et désolidarisant ainsi le groupe 1 d'infusion de son réceptacle formant l'élément de support dudit groupe 1. Les moyens d'actionnement sont avantageusement configurés pour être actionnés manuellement par l'opérateur, de préférence avec une seule main.

Les moyens d'actionnement peuvent aussi être associés à un organe de préhension 6 comprenant vers sa partie supérieure une surface de préhension 7. L'élément de commande, sous la forme d'une poignée 5 aux figures 1 à 3, 9 à 19 de la présente demande, peut ainsi être avantageusement associé avec l'organe de préhension 6 afin d'effectuer l'enlèvement du groupe 1 d'infusion de l'intérieur du réceptacle 3 quand les moyens de verrouillage 10, 15, 16 sont en position déverrouillée.

Il est à noter que les moyens d'actionnement portés par le groupe d'infusion ne comprennent pas obligatoirement une poignée comme élément de commande bien que cela soit le cas aux figures 1 à 3, 9 à 19 de la présente invention. Les moyens d'actionnement peuvent, par exemple, comprendre ainsi un élément de commande, par exemple un bouton, destiné à être tiré, pressé ou tourné, ledit élément de commande étant articulé sur le groupe d'infusion et avantageusement configuré pour participer, au moins en partie, à la préhension du groupe en vue de sa séparation du réceptacle.

Comme il peut être vu notamment aux figures 1 à 3, 9 à 19, la poignée 5 est avantageusement en forme de U renversé, les extrémités libres 5a du U pointant vers le réceptacle 3, ce réceptacle étant seulement visible aux figures 1 à 3, ceci en position montée de la poignée 5 sur le groupe 1 d'infusion. La poignée 5 s'étend donc perpendiculairement au plan formé par le fond du groupe 1 d'infusion ou du réceptacle 3 supportant respectivement leur espace interne 2 ou 4. La poignée 5 est mobile verticalement, c'est à dire perpendiculairement au plan formé par le fond du groupe 1 d'infusion ou par celui de son réceptacle 3. La base du U renversé sert de tête 5b formant surface de préhension pour la poignée 5 et c'est sur la tête 5b qu'appuie ou tire l'opérateur pour provoquer le déplacement de la poignée 5, comme il sera vu ultérieurement.

L'extrémité inférieure libre 5a de la poignée 5 est reçue dans l'évidement 22 pratiqué dans la ceinture 17, cet évidement 22 servant aussi pour la réception d'un organe de verrouillage formant pêne 10. Ainsi, ledit organe 10 et la poignée 5 peuvent être logés ensemble dans l'évidement 22 prévu dans la ceinture 17 en ne dépassant pas latéralement de la ceinture. La ceinture 17 comprend aussi un montant transversal 21 dont la partie sensiblement médiane présente un ergot 21a dirigé vers l'arrière du groupe 1 d'infusion afin de maintenir latéralement la poignée 5 par rapport au groupe 1 d'infusion.

Avant chaque extrémité inférieure libre 5a de la poignée 5, celle-ci présente une portion inclinée dont les côtés, au lieu d'être sensiblement verticaux comme les côtés du reste de la poignée 5, s'étendent avec une inclinaison par rapport à la verticale. Un des côtés de cette portion inclinée forme une surface inclinée 9 avec laquelle coopère un élément complémentaire de l'organe de verrouillage formant pêne 10, comme il sera vu ultérieurement.

Chaque extrémité libre 5a présente donc un axe médian vertical légèrement décalé par rapport à l'axe vertical du reste de la branche du U lui correspondant. Comme il est particulièrement visible aux figures 15 à 19, chaque extrémité libre 5a de la poignée recouvre une portion de la surface externe d'un organe de verrouillage formant pêne 10 et coopère avec l'organe de verrouillage formant pêne 10 comme il sera expliqué ultérieurement.

L'organe de préhension 6 présente aussi une forme en U avec les extrémités du U pointant vers le groupe 1 d'infusion et étant solidarisées avec la ceinture périphérique 17 dudit groupe 1. Cet organe de préhension 6 est ainsi solidaire du groupe 1 et sert à l'enlèvement du groupe 1 hors du réceptacle lorsqu'un opérateur tire verticalement l'organe de préhension 6 vers le haut.

Avantageusement, l'organe de préhension 6 et la poignée 5 sont adjacents l'un à l'autre, la base du U formant leur partie supérieure respective se trouvant approximativement à la même hauteur, au moins lors de l'enlèvement du groupe 1 d'infusion de son réceptacle comme il sera vu par la suite. Ces deux éléments 5 et 6 sont ainsi conformés de sorte qu'un opérateur puisse saisir simultanément et avec une même main la poignée 5 et l'organe de préhension 6.

La coopération des moyens d'actionnement 5 avec les moyens de verrouillage 10 du groupe 1 d'infusion va maintenant être décrite en se référant particulièrement aux figures 15 à 19. Dans ce qui va suivre, l'activation des moyens d'actionnement correspond à une action de l'opérateur afin d'effectuer le déverrouillage des moyens de verrouillage tandis que la désactivation des moyens d'actionnement correspond à une position des moyens d'actionnement pour laquelle aucune action n'est exercée sur eux en vue de déverrouiller les moyens de verrouillage. La désactivation des moyens d'actionnement n'est pas à prendre dans un sens strict, étant donné que cette désactivation cesse automatiquement dès que l'opérateur effectue un déplacement de l'élément de commande en vue du déverrouillage des moyens de verrouillage.

La poignée 5 représentant aux figures 15 à 19 l'élément de commande des moyens d'actionnement comprend un cran de sûreté 8, ce cran de sûreté 8 s'étendant latéralement à la ceinture 17 en s'éloignant de l'extrémité avant 11 de l'organe de verrouillage formant pêne 10. Ce cran de sûreté 8 présente l'avantage de permettre un montage sans outil de la poignée 5 et de faciliter l'assemblage de l'ensemble comprenant le groupe 1 d'infusion en usine et sa maintenance.

Ce cran de sûreté 8 peut se loger entre un ergot supérieur 23 et un ergot inférieur 24 portés par la partie de l'organe de verrouillage formant pêne 10 en vis à vis, aux figures les ergots 23 et 24 étant portés par la face avant de la partie 11 a faisant saillie latéralement de l'organe de verrouillage formant pêne 10. Ceci se produit quand ledit organe 10 est poussé vers l'avant en position de verrouillage comme cela est montré à la figure 16.

L'ergot supérieur 23 de l'organe 10 accomplit aussi une autre fonction que celle de blocage du cran de sûreté 8 de la poignée 5. Sa face supérieure forme une surface inclinée 23a et est en appui contre la surface inclinée 9 en regard portée par la poignée 5 qui lui sert de rampe inclinée de coulissement.

Dans la position montrée à la figure 16, le cran de sûreté 8 est en appui contre la face inférieure de l'ergot supérieur 23 de l'organe 10. Dans cette position, la poignée 5 ne peut plus être déplacée verticalement vers le haut sans entraîner le groupe 1 d'infusion verrouillé sur son réceptacle. La surface inclinée 9 est en butée contre l'ergot supérieur 23 et l'organe de verrouillage formant pêne 10 est dans sa position de verrouillage avec son extrémité avant 11 dépassant vers l'avant du groupe 1 d'infusion pour être reçu dans un logement du réceptacle.

En partant de cette position montrée à la figure 16, quand une pression verticale orientée vers le bas selon la flèche 25 est effectuée par l'opérateur sur la tête 5b de la poignée 5, la surface inclinée 9 disposée sur le côté de la poignée 5 le plus interne au groupe 1 d'infusion appuie sur la surface inclinée 23a de l'ergot supérieur 23 de l'organe 10. L'inclinaison des surfaces 9 et 23a est telle que l'organe de verrouillage formant pêne 10 est poussé vers l'arrière du groupe 1 d'infusion dans une position de déverrouillage de l'organe et donc de libération du groupe 1 d'infusion par rapport au réceptacle le recevant.

Ainsi, un coulissement vertical de la poignée 5 vers le bas du groupe 1 d'infusion selon la flèche 25 entraîne un coulissement de l'organe de verrouillage 10 selon une direction perpendiculaire à celle de la poignée 5, c'est à dire horizontalement et vers l'arrière du groupe 1, cette direction étant désignée par la flèche 26, comme il est montré aux figures 16 et 17.

La figure 17 montre cette position de déverrouillage avec poignée 5 descendue dans l'organe de verrouillage 10. La surface inclinée 23a de l'ergot 23 a coulissé sur la surface inclinée 9 associée de la poignée 5 du fait de la descente de la poignée 5 dans le groupe 1 d'infusion. Les extrémités inférieures 5a de la poignée 5 se trouvent alors plus profondément enfoncées dans ledit groupe 1 d'infusion qu'elles ne l'étaient dans la position illustrée dans la figure 16. Le cran de sûreté 8 de la poignée 5 ne se trouve plus entre ergots supérieur 23 et inférieur 24 de l'organe de verrouillage 10.

Ainsi, le groupe 1 d'infusion est agencé de sorte qu'une pression appliquée sur la poignée 5 autorise la désolidarisation du groupe 1 par rapport au réceptacle. La poignée 5 est alors dans une position d'activation qui autorise la désolidarisation du groupe 1 d'infusion par rapport au réceptacle.

Il suffit alors d'une traction exercée sur la poignée 5 et/ou l'organe de préhension 6 pour séparer le groupe 1 d'infusion de son réceptacle, le cran de sûreté 8 de la poignée 5 n'étant plus en butée contre la face inférieure de l'ergot supérieur 23 de l'organe de verrouillage formant pêne 10.

Comme il est particulièrement visible aux figures 9 à 11, un moyen de rappel est configuré pour ramener les moyens d'actionnement en position haute lorsqu'ils ne sont pas activés, c'est à dire qu'aucune pression orientée vers le bas n'est exercée sur eux. Ainsi, selon un mode de réalisation de l'invention, il est prévu deux ressorts verticaux 20 qui poussent la poignée 5 en position haute comme montré à la figure 16, ces deux ressorts verticaux 20 ne permettant à la poignée 5 de prendre la position basse qu'elle occupe à la figure 17 seulement quand une pression de haut en bas est exercée sur elle par un opérateur.

La figure 15 illustre une position intermédiaire entre un verrouillage de l'organe de verrouillage 10 correspondant à une position haute de la poignée 5 comme montré à la figure 16 et un déverrouillage de l'organe de verrouillage correspondant à une position basse de la poignée 5 comme montré à la figure 17. A la figure 15, la poignée 5 est en position plus basse que celle montrée à la figure 16. Les positions de la poignée 5 et de l'organe de verrouillage 10 montrées à cette figure 15 sont seulement temporaires, étant donné que si aucune force de pression n'est appliquée sur la poignée 5, celle-ci remontera sous l'action de son ressort de rappel vertical 20 montré aux figures 9 à 11 et du ressort de rappel horizontal 14 visible aux figures 9 et 10, celui poussant l'organe de verrouillage 10 vers sa position de verrouillage, le coulissement horizontal de l'organe de verrouillage 10 faisant coulisser vers le haut la poignée 5 pour arriver à la position montrée à la figure 16. Par contre, si une force de pression est appliquée en étant supérieure aux forces de rappel, la poignée 5 descendra et poussera l'organe de verrouillage 10 dans sa position de déverrouillage complet, comme montré à la figure 17.

Comme il est particulièrement visible à la figure 10, il est prévu sur chaque branche du U formé par l'organe de préhension 6 un couloir 12 aménagé pour le logement d'un ressort vertical 20, ce couloir 12 maintenant le ressort 20 en position verticale. Ainsi, en se référant à la figure 9, l'action de la poignée 5 sur l'organe de verrouillage formant pêne 10 est réversible sous l'effet du ressort vertical 20 de la poignée 5, poussant ladite poignée 5 en position de verrouillage dudit organe 10 et sous l'effet du ressort horizontal de l'organe 10 poussant celui-ci en position de verrouillage du groupe 1 d'infusion sur son réceptacle. Ainsi, la position haute de la poignée 5 correspond à une désactivation des moyens d'actionnement qu'elle constitue, l'organe de verrouillage 10 étant alors rappelé en position de verrouillage par son ressort associé 14.

En ce qui concerne cette figure 10, il est à noter que les organes de verrouillage formant pênes 10 sont montrés à cette figure dans une position faisant saillie de la ceinture 17 avec une amplitude qui n'est pas atteinte lors du verrouillage en fonctionnement normal. En effet, en fonctionnement normal, les extrémités inférieures 5a de la poignée alors introduites dans le logement 22 font butée contre un tel avancement des organes 10. Ceci n'est pas le cas à la figure 10 étant donné que la poignée 5 est montrée séparée du groupe 1 d'infusion et non en place sur ce groupe 1. La position en verrouillage de ces organes de verrouillage formant pênes 10 peut être vue notamment aux figures 14, 16 et 19.

Avantageusement, comme il est particulièrement visible aux figures 4 à 11, la surface de préhension 7 de l'organe de préhension 6 ne se trouve pas tout à fait au sommet de l'organe de préhension 6 mais un peu plus bas que celui-ci afin d'être sensiblement à la même hauteur que la tête 5b de la poignée 5 lors de l'action d'enlèvement du groupe 1 d'infusion. La surface de préhension 7 forme ainsi un palier sensiblement horizontal s'étendant à distance du sommet de l'organe de préhension 6.

En ce qui concerne la figure 12, celle-ci montre un organe de verrouillage 10 avec son ergot supérieur 23 placé à distance de la surface inclinée associée de la poignée 5. Une telle position est rarement atteinte en fonctionnement normal, étant donné que le ressort horizontal de l'organe de verrouillage 10 exerce sur ledit organe 10 une force de rappel en position verrouillée et en conséquence pousse son ergot supérieur 23 en butée contre la surface inclinée de la poignée 5.

Le groupe 1 d'infusion est agencé de sorte que, lors du passage de la position de verrouillage à la position de déverrouillage, les surfaces de préhension 5b et 7 respectives de la poignée 5 et de l'organe de préhension 6 se trouvent sensiblement à la même hauteur. Ceci peut être particulièrement bien vu à la figure 18. L'organe de préhension 6 forme alors une poignée additionnelle complémentaire de la poignée 5 des moyens d'actionnement.

Ainsi, les moyens d'actionnement selon la présente invention peuvent aussi remplir, avantageusement avec des moyens de préhension additionnels, la fonction de moyens d'enlèvement du groupe d'infusion hors de son réceptacle pour un démontage de l'ensemble.

Comme il est visible aux figures 2 et 3, le réceptacle 3 comprend deux connecteurs hydrauliques 19, le groupe 1 d'infusion comprenant deux connecteurs complémentaires afin d'assurer l'alimentation hydraulique du groupe 1. Avantageusement, les moyens de verrouillage formés, d'une part, des organes de verrouillage formant pênes 10 et, d'autre part, des organes de verrouillage formant gâches 15 sont répartis de part et d'autre des connecteurs 19 en empêchant ainsi la rotation du groupe 1 d'infusion sous l'effet de la pression du fluide alimentant le groupe 1. Ces moyens de verrouillage, notamment les logements 16, sont positionnés sur des parois du réceptacle 3 les plus éloignées de l'axe de symétrie séparant les connecteurs 19. Ce positionnement accroît le bras de levier par rapport à l'axe de rotation autour duquel le groupe 1 aurait tendance à tourner sous l'effet de la pression. L'invention permet ainsi de conserver un encombrement et un poids limités tout en offrant une bonne robustesse.

Il est à noter qu'à l'exception des ressorts 14 et 20, toutes les pièces de l'ensemble peuvent être réalisées en matière plastique injectée, ce qui réduit les temps de fabrication et d'assemblage et facilite le démantèlement en fin de vie de la machine.

Avantageusement, le réceptacle 3 montré aux figures 1 à 3 est lui-même logé dans une base d'accueil prévue dans la machine, cette base d'accueil n'étant pas montrée aux figures. Le réceptacle 3 comporte avantageusement des moyens de solidarisation amovibles agencés pour assurer sa solidarisation amovible avec ladite base d'accueil de la machine.

La présente invention offre ainsi une solution robuste et peu onéreuse pour faciliter la fabrication et le démantèlement des machines en fin de vie.

L'invention n'est pas limitée aux modes de réalisation décrits mais s'étend à tout mode de réalisation couvert par les revendications.

**REFERENCES**

| | | | |
|---|---|---|---|
| 1. | groupe d'infusion | 23a. | surface inclinée |
| 2. | espace interne creux du groupe | 24. | ergot inférieur |
| 3. | réceptacle | 25. | direction de descente de la poignée |
| 4. | espace interne creux du réceptacle | 26. | direction de retrait du pêne |
| 5. | poignée | 100. | ensemble |
| 5a. | partie d'extrémité libre de la poignée | | |
| 5b. | tête de la poignée | | |
| 6. | organe de préhension | | |
| 7. | surface de préhension de l'organe | | |
| 8. | cran de sûreté de la poignée | | |
| 9. | surface inclinée portée par la poignée | | |
| 10. | organe de verrouillage formant pêne | | |
| 11. | extrémité avant de l'organe du pêne | | |
| 11a. | partie faisant saillie latéralement du pêne | | |
| 12. | couloir | | |
| 13. | orifice d'introduction du ressort | | |
| 14. | ressort de rappel horizontal | | |
| 15. | premier logement formant gâche | | |
| 16. | second logement formant gâche | | |
| 16a | pièce présentant un découpage formant second logement | | |
| 17. | ceinture périphérique | | |
| 18. | nervures longitudinales de la ceinture | | |
| 18a. | nervures longitudinales du pêne | | |
| 19. | connecteur vertical | | |
| 20. | ressort de rappel vertical pour poignée | | |
| 21. | montant transversal de la ceinture | | |
| 21a. | ergot | | |
| 22. | évidement | | |
| 23. | ergot supérieur | | |

## Revendications

1. Ensemble (100) pour machine de préparation de boissons par extraction d'un produit à infuser contenu dans une dose , comprenant un groupe (1) d'infusion du produit à infuser contenu dans la dose au moins équipé d'une chambre d'extraction, la chambre d'extraction comprenant deux demi chambres aptes à être mutuellement approchées ou éloignées pour respectivement fermer ou ouvrir la chambre d'extraction, et d'un dispositif d'ouverture et de fermeture de la chambre d'extraction, l'ensemble (100) comprenant un réceptacle (3) destiné à être solidaire de la machine et configuré pour accueillir le groupe (1) d'infusion de manière amovible,
l'ensemble étant **caractérisé en ce qu'**il comprend des moyens de verrouillage (10, 15, 16) du groupe (1) sur le réceptacle (3) et des moyens d'actionnement (5, 6) configurés pour être actionnés manuellement par l'opérateur et portés par l'un parmi le groupe (1) et le réceptacle (3) et commandant les moyens de verrouillage (10, 15, 16) et **en ce qu'**il est agencé de sorte que :
• dans une position de désactivation des moyens d'actionnement (5, 6), les moyens de verrouillage (10, 15, 16) empêchent la désolidarisation du groupe (1) par rapport au réceptacle (3) :
• dans une position d'activation des moyens d'actionnement (5, 6), les moyens de verrouillage (10, 15, 16) autorisent la désolidarisation du groupe (1) par rapport au réceptacle (3) ;
les moyens de verrouillage (10, 15, 16) comprenant au moins un organe de verrouillage (10), commandé par les moyens d'actionnement (5, 6), monté coulissant sur l'un parmi le groupe (1) et le réceptacle (3) et étant configuré pour venir en prise avec un organe de verrouillage complémentaire (15, 16) porté par l'autre (3) parmi le groupe (1) et le réceptacle (3), la venue en prise de l'organe de verrouillage (10) avec l'organe de verrouillage complémentaire (15, 16) associé empêchant la désolidarisation du groupe (1) par rapport au réceptacle (3).

2. Ensemble (100) selon la revendication précédente, dans lequel un organe de verrouillage formant pêne (10) est porté par le groupe (1) tandis que son organe de verrouillage complémentaire forme une gâche (15, 16) portée par le réceptacle (3) et dans lequel le groupe (1) comprend de préférence une ceinture (17) périphérique entourant le groupe (1) d'infusion, ladite ceinture (17) périphérique portant les deux organes de verrouillage formant pênes (10) disposés de manière symétrique sur la ceinture (17).

3. Ensemble (100) selon l'une quelconque des revendications précédentes, dans lequel le groupe (1) comprend au moins un connecteur hydraulique et le réceptacle (3) comprend au moins un connecteur (19) complémentaire pour assurer l'alimentation hydraulique du groupe (1), le connecteur du groupe et le connecteur complémentaire du réceptacle étant conformés pour définir une direction de poussée pour un fluide sous pression injecté dans le groupe, l'au moins un organe de verrouillage (10) étant configuré pour coulisser selon une direction perpendiculaire à la direction de poussée.

4. Ensemble (100) selon l'une quelconque des revendications précédentes, configuré pour être alimenté en fluide sous pression et de sorte que l'alimentation en fluide sous pression génère sur le groupe (1) une force de poussée selon une direction de poussée, l'ensemble étant en outre conformé de manière à ce que l'organe de verrouillage (10) et l'organe de verrouillage complémentaire (15, 16) coopèrent de sorte que ladite force de poussée tende à rapprocher l'organe de verrouillage (10) et l'organe de verrouillage complémentaire (15, 16).

5. Ensemble (100) selon l'une quelconque des revendications précédentes, dans lequel le groupe (1) comprend des moyens d'actionnement configurés pour rapprocher et/ou éloigner les deux demi chambres et dans lequel les moyens d'actionnement comprennent au moins l'un parmi les éléments suivants : un vérin, une genouillère, une came, une poignée d'actionnement.

6. Ensemble (100) selon l'une quelconque des revendications précédentes, dans lequel ses moyens d'actionnement (5, 6) sont configurés pour être actionnés manuellement par l'opérateur, de préférence avec une seule main.

7. Ensemble (100) selon l'une quelconque des revendications précédentes, agencé de sorte qu'en position de déverrouillage des moyens de verrouillage (10, 15, 16), le groupe (1) peut être séparé manuellement du réceptacle (3).

8. Ensemble (100) selon l'une quelconque des revendications précédentes, dans lequel les moyens d'actionnement (5, 6) sont portés par le groupe (1) et comprennent un élément de commande manuel tel qu'une poignée (5) ou un bouton destiné à être tiré, pressé ou tourné, ledit élément de commande étant articulé sur le groupe (1) et configuré pour participer, au moins en partie, à la préhension du groupe (1) en vue de sa séparation du réceptacle (3).

9. Ensemble (100) selon la revendication précédente, dans lequel l'élément de commande est une poignée (5) configurée pour se déplacer lors de son actionnement et comprenant une surface inclinée (9) agencée pour coopérer avec une surface inclinée (23a) portée par les moyens de verrouillage (10) associés de sorte que le déplacement de la poignée (5) entraîne un déplacement des moyens de verrouillage (10) et dans lequel, de préférence, la poignée (5) est montée coulissante sur le groupe (1) et est de préférence configurée de sorte qu'un coulissement de la poignée (5) entraîne un coulissement des moyens de verrouillage (10) associés selon une direction perpendiculaire à celle de la poignée (5).

10. Ensemble (100) selon l'une quelconque des deux revendications précédentes, dans lequel un organe de préhension (6) est fixé au groupe (1) et conformé de sorte qu'un utilisateur puisse appréhender simultanément et avec une même main l'élément de commande (5) et l'organe de préhension (6).

11. Ensemble (100) selon la revendication précédente, dans lequel le groupe (1) est agencé de sorte qu'une pression appliquée sur l'élément de commande (5) autorise la désolidarisation du groupe (1) par rapport au réceptacle (3) et qu'une traction exercée sur l'organe de préhension (6) sépare le groupe (1) du réceptacle (3).

12. Ensemble (100) selon l'une quelconque des deux revendications précédentes, dans lequel le groupe (1) est agencé de sorte que lors du passage de la position de verrouillage à la position de déverrouillage, la partie (5b) de l'élément de commande (5) actionnée par l'opérateur se rapproche d'une surface de préhension (7) prévue sur l'organe de préhension (6) et dans lequel, de préférence, la surface de préhension (6) forme une poignée additionnelle complémentaire de l'élément de commande (5) des moyens d'actionnement.

13. Ensemble (100) selon l'une quelconque des revendications précédentes, dans lequel le réceptacle (3) comprend deux connecteurs hydrauliques (19) et le groupe (1) comprend deux connecteurs complémentaires pour assurer l'alimentation hydraulique du groupe (1) et dans lequel les moyens de verrouillage (10, 15, 16) sont répartis de part et d'autre des connecteurs en empêchant ainsi la rotation du groupe (1) sous l'effet d'une pression du fluide alimentant ledit groupe (1).

14. Machine de préparation de boissons par extraction d'un produit à infuser, comprenant un ensemble selon l'une quelconque des revendications précédentes.

15. Procédé d'assemblage d'un ensemble (100) selon l'une quelconque des revendications 1 à 13 **caractérisé en ce qu'**il comprend les étapes suivantes :
- on active les moyens d'actionnement (5, 6) de sorte que les moyens de verrouillage (10, 15, 16) autorisent la désolidarisation du groupe (1) par rapport au réceptacle (3),
- on dispose le groupe (1) sur ou dans le réceptacle (3),
- on désactive les moyens d'actionnement (5, 6) de sorte que les moyens de verrouillage (10, 15, 16) empêchent la désolidarisation du groupe (1) par rapport au réceptacle (3).

## Patentansprüche

1. Anordnung für eine Maschine zur Herstellung von Getränken durch Extraktion eines Brühproduktes, das in einer Dosis enthalten ist, eine Brühgruppe (1) des zu brühenden Produktes umfassend, das in der Dosis enthalten ist, zumindest mit einer Extraktionskammer ausgestattet, wobei die Extraktionskammer zwei Halbkammern umfasst, die imstande sind, sich einander anzunähern oder sich voneinander zu entfernen, um die Extraktionskammer jeweils zu schließen oder zu öffnen, und eine Öffnungs- und Schließvorrichtung für die Extraktionskammer, wobei die Anordnung (100) einen Behälter (3) umfasst, der dazu bestimmt ist, fest mit der Maschine verbunden zu sein und konfiguriert ist, um die Brühgruppe (1) in abnehmbarer Form aufzunehmen, wobei die Anordnung **dadurch gekennzeichnet ist, dass** sie Verriegelungsmittel (10, 15, 16) für die Gruppe (1) auf dem Behälter (3), und Betätigungsmittel (5, 6) umfasst, die konfiguriert sind, um von Hand durch den Bediener betätigt zu werden, und durch eines aus der Gruppe (1) und dem Behälter (3) getragen zu werden, und die Verriegelungsmittel (10, 15, 16) steuernd, und dadurch, dass sie angeordnet ist, sodass:
- die Verriegelungsmittel (10, 15, 16) in einer Position zum Deaktivieren der Betätigungsmittel (5, 6) die Trennung der Gruppe (1) im Verhältnis zum Behälter (3) verhindern;
- die Verriegelungsmittel (10, 15, 16) in einer Position zum Aktivieren der Betätigungsmittel (5, 6) die Trennung der Gruppe (1) im Verhältnis zum Behälter (3) freigeben;
wobei die Verriegelungsmittel (10, 15, 16) zumindest ein Verriegelungsorgan (10) umfassen, das durch die Betätigungsmittel (5, 6) gesteuert wird, gleitend auf einem aus der Gruppe (1) und dem Behälter (3) montiert ist und konfiguriert ist, um in Eingriff mit einem ergänzenden Verriegelungsorgan (15, 16) zu kommen, das vom anderen (3) aus der Gruppe (1) und dem Behälter (3) getragen wird, wobei das in Eingriff bringen des Verriegelungsorgans (10) mit dem zugehörigen ergänzenden Verriegelungsorgan (15, 16) die Trennung der Gruppe (1) im Verhältnis zum Behälter (3) verhindert.

2. Anordnung nach dem vorhergehenden Anspruch, wobei ein Verriegelungsorgan, das einen Riegel (10) bildet, von der Gruppe (1) getragen wird, während sein ergänzendes Verriegelungsorgan einen Schließhaken (15, 16) bildet, der vom Behälter (3) getragen wird, und wobei die Gruppe (1) vorzugsweise einen umlaufenden Bund (17) umfasst, der die Brühgruppe (1) umgibt, wobei der besagte umlaufende Bund (17), der die beiden Verriegelungsorgane trägt, die Riegel (10) bilden, symmetrisch am Bund angeordnet sind.

3. Anordnung (100) nach einem der vorhergehenden Ansprüche, wobei die Gruppe (1) zumindest einen Hydraulikstecker umfasst, und der Behälter (3) zumindest einen ergänzenden Stecker (19) umfasst, um für die Hydraulikversorgung der Gruppe (1) zu sorgen, wobei der Stecker der Gruppe und der ergänzende Behälterstecker ausgeformt sind, um eine Schubrichtung für ein unter Druck stehendes Fluid zu definieren, das in die Gruppe injiziert wird, wobei das zumindest eine Verriegelungsorgan (10) konfiguriert ist, um in eine Richtung senkrecht zur Schubrichtung zu gleiten.

4. Anordnung (100) nach einem der vorhergehenden Ansprüche, die konfiguriert ist, um mit einem unter Druck stehenden Fluid versorgt zu werden, sodass die Versorgung mit dem unter Druck stehenden Fluid auf der Gruppe (1) eine Schubkraft in eine Schubrichtung erzeugt, wobei die Anordnung darüber hinaus ausgeformt ist, damit das Verriegelungsorgan (10) und das ergänzende Verriegelungsorgan (15, 16) zusammenwirken, sodass die besagte Schubkraft dazu tendiert, sich dem Verriegelungsorgan (10) und dem ergänzenden Verriegelungsorgan (15, 16) anzunähern.

5. Anordnung (100) nach einem der vorhergehenden Ansprüche, wobei die Gruppe (1) Betätigungsmittel umfasst, die konfiguriert sind, um die beiden Halbkammern anzunähern und/ oder zu entfernen, und wobei die Betätigungsmittel zumindest eines der folgenden Elemente umfassen: einen Zylinder, einen Kniehebel, einen Nocken, einen Betätigungsgriff.

6. Anordnung (100) nach einem der vorhergehenden Ansprüche, wobei die Betätigungsmittel (5, 6) konfiguriert sind, um von Hand durch den Bediener, vorzugsweise mit einer einzigen Hand betätigt zu werden.

7. Anordnung (100) nach einem der vorhergehenden Ansprüche, die angeordnet ist, sodass die Gruppe (1) in der Verriegelungsposition der Verriegelungsmittel (10, 15, 16) von Hand vom Behälter (3) getrennt werden kann.

8. Anordnung (100) nach einem der vorhergehenden Ansprüche, wobei die Betätigungsmittel (5, 6) von der Gruppe (1) getragen werden, und ein Element zur manuellen Steuerung, wie einen Griff (5) oder einen Knopf umfassen, der dazu bestimmt ist, gezogen, gedrückt oder gedreht zu werden, wobei das besagte Element zur Steuerung an der Gruppe (1) angelenkt ist und konfiguriert ist, um zumindest teilweise zum Greifen der Gruppe (1) in Hinblick auf deren Trennung vom Behälter (3) beizutragen.

9. Anordnung (100) nach dem vorhergehenden Anspruch, wobei das Element zur Steuerung ein Griff (5) ist, der konfiguriert ist, um sich bei seiner Betätigung zu bewegen, und eine geneigte Oberfläche (9) umfassend, die angeordnet ist, um mit einer geneigten Oberfläche (23a) zusammenzuwirken, die durch die Verriegelungsmittel (10) getragen wird, die zugeordnet sind, sodass die Bewegung des Griffs (5) eine Bewegung der Verriegelungsmittel (10) auslöst und wobei der Griff (5) vorzugsweise gleitend auf der Gruppe (1) montiert ist, und vorzugsweise konfiguriert ist, sodass ein Gleiten des Griffs (5) für ein Gleiten der Verriegelungsmittel (10) sorgt, die in einer Richtung senkrecht zu jener des Griffs (5) zugeordnet sind.

10. Anordnung (100) nach einem der beiden vorhergehenden Ansprüche, wobei ein Greiforgan (6) an der Gruppe (1) befestigt ist und ausgeformt ist, sodass ein Benutzer gleichzeitig und mit einer selben Hand das Element zur Steuerung (5) und das Greiforgan (6) erfassen kann.

11. Anordnung (100) nach dem vorhergehenden Anspruch, wobei die Gruppe (1) angeordnet ist, sodass ein auf das Element zur Steuerung (5) ausgeübter Druck die Trennung der Gruppe (1) im Verhältnis zum Behälter (3) freigibt und ein auf das Greiforgan (6) ausgeübter Zug die Gruppe (1) vom Behälter (3) trennt.

12. Anordnung (100) nach einem der beiden vorhergehenden Ansprüche, wobei die Gruppe (1) angeordnet ist, sodass sich beim Übergang von der Verriegelungsposition zur Freigabeposition der Abschnitt (5b) des Elements zur Steuerung (5), der vom Bediener betätigt wird, einer Greiffläche (7) annähert, die auf dem Greiforgan (6) vorgesehen ist, und wobei die Greiffläche (6) vorzugsweise einen zusätzlichen ergänzenden Griff des Elements zur Steuerung (5) der Betätigungsmittel bildet.

13. Anordnung (100) nach einem der vorhergehenden Ansprüche, wobei der Behälter (3) zwei Hydraulikstecker (19) umfasst, und die Gruppe (1) zwei ergänzende Stecker umfasst, um für die Hydraulikversorgung der Gruppe (1) zu sorgen, und wobei die Verriegelungsmittel (10, 15, 16) beiderseits der Stecker verteilt sind, und somit die Rotation der Gruppe (1) unter der Wirkung eines Drucks des Fluids verhindern, mit dem die besagte Gruppe (1) versorgt wird.

14. Maschine zur Herstellung von Getränken durch Extraktion eines Brühproduktes, eine Anordnung nach einem der vorhergehenden Ansprüche umfassend.

15. Verfahren zum Montieren einer Anordnung (100) nach einem der Ansprüche 1 bis 13, **dadurch gekennzeichnet, dass** es die folgenden Schritte umfasst:
- man aktiviert die Betätigungsmittel (5, 6), sodass die Verriegelungsmittel (10, 15, 16) die Trennung der Gruppe (1) im Verhältnis zum Behälter (3) freigeben;
- man bringt die Gruppe (1) auf oder im Behälter (3) an,
- man deaktiviert die Betätigungsmittel (5, 6), sodass die Verriegelungsmittel (10, 15, 16) die Trennung der Gruppe (1) im Verhältnis zum Behälter (3) verhindern.

## Claims

1. Assembly (100) for a machine for preparing beverages by means of the extraction of a product to be infused contained in a dose, comprising a unit (1) for infusing a product to be infused contained in the dose at least provided with an extraction chamber, with the extraction chamber comprising two half-chambers able to mutually brought closer together or separated in order to respectively close or open the extraction chamber, and with a device for opening and closing the extraction chamber, with the assembly (100) comprising a container (3) intended to be solidly connected to the machine and configured to removably receive the infusion unit (1), with the assembly **characterised in that** it comprises means (10, 15, 16) for locking the unit (1) onto the container (3) and actuation means (5, 6) configured to be actuated manually by the operator and supported by one among the unit (1) and the container (3) and controlling the means for locking (10, 15, 16) and **in that** it is arranged such that:
- in a position in which the actuation means (5, 6) are deactivated, the means for locking (10, 15, 16) prevent the unit (1) from being disconnected from the container (3);
- in a position in which the actuation means (5, 6) are activated, the means for locking (10, 15, 16) allow the unit (1) to be disconnected from the container (3);
the means for locking (10, 15, 16) comprising at least one locking member (10), controlled by the actuation means (5, 6), slidably mounted on one among the unit (1) and the container (3) and being configured to engage with an additional locking member (15, 16) supported by the other (3) among the unit (1) and the container (3), with the engaging of the locking member (10) with the associated additional locking member (15, 16) preventing the unit (1) from being disconnected from the container (3).

2. Assembly (100) as claimed in the preceding claim, wherein a locking member forming a bolt (10) is supported by the unit (1) while its additional locking member forms a latch (15, 16) supported by the container (3) and wherein the unit (1) preferably comprises a peripheral belt (17) surrounding the infusion unit (1), said peripheral belt (17) supporting the two locking members forming bolts (10) arranged symmetrically on the belt (17).

3. Assembly (100) as claimed in any preceding claim, wherein the unit (1) comprises at least one hydraulic connector and the container (3) comprises at least one additional connector (19) in order to ensure the hydraulic supply of the unit (1), with the connector of the unit and the additional connector of the container being shaped to define a direction of thrust for a fluid under pressure injected into the unit, with the at least one locking member (10) being configured to slide along a direction perpendicular to the direction of thrust.

4. Assembly (100) as claimed in any preceding claim, configured to be supplied with fluid under pressure and in such a way that the supply of fluid under pressure generates on the unit (1) a force of thrust according to a direction of thrust, with the assembly being furthermore shaped in such a way that the locking member (10) and the additional locking member (15, 16) cooperate in such a way that said force of thrust tends to bring the locking member (10) closer to the additional locking member (15, 16).

5. Assembly (100) as claimed in any preceding claim, wherein the unit (1) comprises actuation means configured to bring together and/or separate the two half-chambers and wherein the actuation means comprise at least one among the following elements: a cylinder, a toggle, a cam, an actuating handle.

6. Assembly (100) as claimed in any preceding claim, wherein its actuation means (5, 6) are configured to be actuated manually by the operator, preferably with a single hand.

7. Assembly (100) as claimed in any preceding claim, arranged in such a way that in the unlocked position of the means for locking (10, 15, 16), the unit (1) can be separated manually from the container (3).

8. Assembly (100) as claimed in any preceding claim, wherein the actuation means (5, 6) are supported by the unit (1) and include a manual control element such as a handle (5) or a button intended to be drawn, pressed or turned, said control element being articulated on the unit (1) and configured to participate, at least partially, in the grasping of the unit (1) for the purpose of separating it from the container (3).

9. Assembly (100) as claimed in the preceding claim, wherein the control element is a handle (5) configured to be displaced when it is actuated and comprising an inclined surface (9) arranged to cooperate with an inclined surface (23a) supported by the associated means for locking (10) in such a way that the displacement of the handle (5) drives a displacement of the means for locking (10) and wherein, more preferably, the handle (5) is slidably mounted on the unit (1) and is preferably configured in such a way that a sliding of the handle (5) drives a sliding of the associated means for locking (10) along a direction perpendicular to that of the handle (5).

10. Assembly (100) according to any of the two preceding claims, wherein a grasping member (6) is fastened to the unit (1) and shaped in such a way that a user can simultaneously apprehend and with the same hand the control element (5) and the grasping member (6).

11. Assembly (100) as claimed in the preceding claim, wherein the unit (1) is arranged in such a way that a pressure applied on the control element (5) allows the unit (1) to be disconnected from the container (3) and that a traction exerted on the grasping member (6) separates the unit (1) from the container (3).

12. Assembly (100) according to any of the two preceding claims, wherein the unit (1) is arranged in such a way that when passing from the locked position to the unlocked position, the portion (5b) of the control element (5) actuated by the operator comes closer to a grasping surface (7) provided on the grasping member (6) and wherein, preferably, the grasping surface (6) forms an additional handle that is complementary with the control element (5) of the actuation means.

13. Assembly (100) as claimed in any preceding claim, wherein the container (3) comprises two hydraulic connectors (19) and the unit (1) comprises two additional connectors in order to provide the hydraulic supply of the unit (1) and wherein the means for locking (10, 15, 16) are distributed on either side of the connectors preventing as such the rotation of the unit (1) under the effect of a pressure of the fluid supplying said unit (1).

14. Machine for preparing beverages by means of the extraction of a product to be infused, comprising an assembly as claimed in any preceding claim.

15. Method for assembling an assembly (100) according to any of claims 1 to 13 **characterised in that** it comprises the following steps:
- the actuation means (5, 6) are activated in such a way that the means for locking (10, 15, 16) allow the unit (1) to be disconnected from the container (3),
- the unit (1) is arranged on or in the container (3),
- the actuation means (5, 6) are deactivated in such a way that the means for locking (10, 15, 16) prevent the unit (1) from being disconnected from the container (3).
